(19) **Europäisches Patentamt / European Patent Office / Office européen des brevets**

(11) **EP 4 579 629 A2**

(12) # EUROPEAN PATENT APPLICATION

(43) Date of publication:
**02.07.2025 Bulletin 2025/27**

(21) Application number: **24216057.0**

(22) Date of filing: **28.11.2024**

(51) International Patent Classification (IPC):
**G08G 1/0967** (2006.01)    **G08G 1/16** (2006.01)
**H04W 4/40** (2018.01)    **H04W 4/44** (2018.01)
**H04W 4/46** (2018.01)    **H04W 56/00** (2009.01)

(52) Cooperative Patent Classification (CPC):
**G08G 1/096783; G08G 1/096725; G08G 1/096741;
G08G 1/096791; G08G 1/164; G08G 1/166;
H04W 4/40; H04W 4/44; H04W 4/46;
H04W 56/0015**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.12.2023 KR 20230191166
29.01.2024 KR 20240013384**

(71) Applicant: **IT Telecom Co., Ltd.
Anyang-si, Gyeonggi-do 14117 (KR)**

(72) Inventor: **CHOI, KwangJoo
05555 Seoul (KR)**

(74) Representative: **Jung, Minkyu
Wuesthoff & Wuesthoff
Patentanwälte und Rechtsanwalt PartG mbB
Schweigerstraße 2
81541 München (DE)**

(54) **SYSTEM FOR EXPANDING RECOGNITION AREA OF VEHICLE BASED ON SURROUNDING ENVIRONMENT INFORMATION**

(57)    Provided is a system for expanding a recognition area of a vehicle on the basis of surrounding environment information that allows safe and efficient autonomous driving by receiving recognition information of surrounding vehicles and surrounding infrastructure and expanding a recognition area of a host vehicle. The system provides safe driving information required for autonomous driving in real time using various information collected by entities of an autonomous driving system such that a recognition area of an autonomous vehicle is expanded. Further, it is possible to support smooth communication in a synchronization shadow area that may exist between roadside units (RSUs) because a synchronization signal region is smaller than a signal region for transmitting data

## Description

CROSS-REFERENCE TO RELATED APPLICATION

This application claims priority to and the benefit of Korean Patent Application No. 10-2023-0191166, filed on December 26, 2023 and Korean Patent Application No. 10-2024-0013384, filed on January 29, 2024, the disclosure of which is incorporated herein by reference in its entirety.

BACKGROUND

### 1. Field of the Invention

The present invention relates to a system for expanding a recognition area of a vehicle on the basis of surrounding environment information, and more particularly, to a system for expanding a recognition area of a vehicle on the basis of surrounding environment information that allows safe and efficient autonomous driving by receiving recognition information of surrounding vehicles and surrounding infrastructure and expanding a recognition area of a host vehicle.

### 2. Discussion of Related Art

A cooperative-intelligent transport system (C-ITS) is said to be a next-generation intelligent transport system. A C-ITS is a system in which a vehicle cooperates with infrastructure or another vehicle through communication. A C-ITS manages vehicle-to-everything (V2X) communication between a center (server), roadside units (RSUs), and a vehicle. In 2016, at the Automated Vehicle Symposium which is the world's largest event for autonomous driving experts, the US Department of Transportation (DOT) announced that autonomous driving will evolve from standalone automated vehicle to connected automated vehicle (CAV)

With the development of high-level autonomous systems, research is underway on the transportation side to naturally determine driving priorities through mutual negotiation between autonomous vehicles or between main transportation entities. For example, when there is a lane closure due to construction ahead, an autonomous vehicle traveling in the mainstream and an autonomous vehicle that has to change lanes to merge may determine the order of yielding or prioritized driving in consideration of mutual locations and speed thereof, and determine speed and trajectories for the determination result. The exchange of recognition information between autonomous vehicles is a key technical prerequisite for the implementation of such related technologies.

When each individual vehicle passes through sections with multiple entrances and exits, such as merging, branching, and entering and exiting intersections, or faces unexpected situations, such as a jaywalking pedestrian or an emergency vehicle during autonomous driving on highways, arterials, and streets, sensors of the vehicle alone have a limited range of perception of the surrounding environment, and there is a risk of injury and damage to the vehicle due to collision with other vehicles and pedestrians. An autonomous vehicle combines information of sensors installed therein with information of a three-dimensional (3D) road map (high-definition (HD) road map) in centimeters to accurately determine the location thereof up to a lane and make driving decisions during travel. Under adverse driving conditions caused by bad weather and various unexpected events, each individual autonomous vehicle has a reduced sensing range and degraded accuracy and reliability of measurement. Accordingly, a cooperative control technology for autonomous driving is necessary to expand the range of environmental information recognition around the travel space, cross-validate detected objects, and jointly respond to an unexpected situation ahead by sharing sensing information with other autonomous vehicles. Further, in the next-generation autonomous driving technology, vehicles are responsible for travel safety without switching control, and thus it is necessary to expand the recognition area of a vehicle by building an HD map and providing data based on vehicle-to-vehicle (V2V) communication to overcome the limitations of sensor information.

Meanwhile, with the growing market for V2X technology, major companies and research organizations in each country are working to develop and standardize the technology in order to have the upper hand in the autonomous vehicle market. Standard communication technologies for V2X include wireless access in vehicular environment (WAVE) of dedicated short-range communications (DSRC) and Long-Term Evolution (LTE) V2X of cellular (C) C-V2X. Since WAVE and C-V2X have different protocol stacks and different data modulation methods, WAVE terminals cannot process C-V2X signals, and C-V2X terminals cannot process WAVE signals. Meanwhile, according to LTE-advanced (LTE-A), an interface between terminals is referred to as a sidelink, and it is necessary to transmit a sidelink synchronization signal (SLSS) and a physical sidelink broadcast channel (PSBCH) to synchronize the terminals with each other.

C-V2X communication connections according to the related art do not allow use of SLSSs in places where global navigation satellite system (GNSS) signals are not available such as a long tunnel and an underground parking structure. In addition, there are difficulties with communication in shadow areas of SLSSs generated between RSUs.

RELATED ART DOCUMENTS

**Patent Documents**

(Patent Document 0001) Korean Patent Registration No. 10-24778588 (12 Dec 2022)
(Patent Document 0002) Korean Patent Application No. 2020-0086681 (17 Jul 2020)

SUMMARY OF THE INVENTION

The present invention is directed to expanding a recognition area of an autonomous vehicle by providing safe driving information required for autonomous driving in real time using various information collected by entities of an autonomous driving system.

The present invention is also directed to providing a device and method for providing a sidelink synchronization signal (SLSS) between roadside units (RSUs) to complement vehicle-to-everything (V2X) communication in a shadow area of SLSSs.

According to an aspect of the present invention, there is provided a system for expanding a recognition area of a vehicle on the basis of surrounding environment information, the system including a first vehicle 5000 and a second vehicle 5500. The first vehicle 5000 includes a sensor unit 5010 configured to detect surrounding environment information, a communication unit 5020 configured to communicate with the second vehicle 5500, a memory configured to store at least one instruction, and a processor configured to execute the at least one instruction.

The system may further include an RSU 50, and the communication unit 5020 of the first vehicle 5000 may receive safe driving information from the RSU 50.

The system may further include a synchronization signal complementation device 10, and the synchronization signal complementation device 10 may complement a synchronization signal between RSUs through the operations of receiving a 1st sync signal from a nearby RSU, determining a sync timing from the 1st sync signal, and generating a 1-1 sync signal on the basis of the sync timing and transmitting the 1-1 sync signal.

The synchronization signal complementation device 10 may complement the synchronization signal between the RSUs further through the operations of detecting a sync signal within a communication coverage area at predetermined periods, when different sync signals are simultaneously detected within the communication coverage area, determining a priority order of the different sync signals, and generating a synchronization signal of one of the sync signals which is determined in accordance with the priority order and transmitting the synchronization signal.

BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:

FIG. 1 is a diagram of a system for expanding a recognition area of a vehicle on the basis of surrounding environment information according to a disclosure;
FIG. 2 is a diagram illustrating detailed internal configurations of a first vehicle (5000) and a second vehicle (5500) according to a disclosure;
FIG. 3 is a diagram schematically illustrating operations of a cooperative-intelligent transport system (C-ITS) smart edge roadside unit (RSU) for expanding a recognition range of an autonomous vehicle according to a disclosure;
FIG. 4 is a diagram illustrating a configuration of a C-ITS smart edge RSU for expanding a recognition range of an autonomous vehicle according to a disclosure;
FIG. 5 is a diagram illustrating a detailed configuration of a sensor unit according to a disclosure;
FIG. 6 is a diagram illustrating a process of generating safe driving information on a road with a C-ITS smart edge RSU for expanding a recognition range of an autonomous vehicle according to a disclosure;
FIG. 7 is a diagram illustrating a detailed configuration of a processor including an artificial intelligence (AI) training model according to a disclosure;
FIG. 8 is a diagram illustrating a characteristic of complementing a synchronization signal between RSUs according to a disclosure;
FIG. 9 is a flowchart illustrating a method of complementing a synchronization signal between RSUs according to a disclosure;
FIG. 10 is a diagram illustrating positions in a synchronization signal according to a disclosure;

FIG. 11 is a diagram illustrating positions in a reference signal according to a disclosure;

FIG. 12 is a diagram illustrating a configuration of a device for complementing a synchronization signal between RSUs according to a disclosure; and

FIG. 13 is a diagram illustrating a characteristic of determining a sync time using a correlator and a matched filter according to a disclosure.

## DETAILED DESCRIPTION OF EXEMPLARY EMBODIMENTS

Hereinafter, the present disclosure will be described in detail with reference to the accompanying drawings.

Terminology used in the present specification will be briefly described first, and then the present disclosure will be described in detail.

As terms used herein, general terms currently used as widely as possible will be selected in consideration of functionality in the present disclosure, but may vary depending on the intent of those of ordinary skill in the art, precedents, the advent of new technology, and the like. In particular, a term may be arbitrarily selected by the applicant. In this case, the meaning of the term will be explained in detail through the relevant description of the disclosure. Therefore, the terms used herein should be defined on the basis of their meanings and the overall content of the present disclosure rather than their names.

In this application, the terms "include," "may include," "have," "may have," and the like indicate the presence of corresponding features (e.g., integers, functions, operations, or components such as parts) and do not preclude the presence of additional features.

The expression "A and/or B" should be understood as indicating any one of "A," "B," and "A and B."

As used herein, terms such as "first," "second," and the like may be used to describe various components irrespective of order and/or importance, but components are not limited by the terms. The terms are only used for the purpose of distinguishing one component from others.

It will be understood that, when a component (e.g., a first component) is referred to as being "(operatively or communicatively) coupled with/to" or "connected to" another component (e.g., a second component), the components may be directly coupled to each other or coupled through still another component (e.g., a third component).

Singular expressions include plural expressions unless the context clearly indicates otherwise. In the present specification, terms such as "include," "configured," and the like indicate the presence of features, integers, steps, operations, parts, or combinations thereof stated herein and do not preclude the presence or addition of one or more other features, integers, steps, operations, parts, or combinations thereof.

In the present disclosure, a "module" or "unit" may perform at least one function or operation and may be implemented as hardware, software, or a combination of hardware and software. Also, a plurality of "modules" or "units" may be integrated into at least one module and implemented as at least one processor (not shown) except for "modules" or "units" that are to be implemented as specific hardware.

In embodiments of the present invention, a new radio (NR) system and a Long-Term Evolution (LTE)/LTE-Advanced (LTE-A) system will be mainly described in detail. However, with slight modifications that do not significantly depart from the scope of the present disclosure, the subject matter of the present disclosure can be applied to not only other communication systems with similar technological backgrounds (e.g., cellular communication systems, such as Wireless Broadband (WiBro) and Global System for Mobile Communication (GSM), or short-range communication systems, such as wireless fidelity (Wi-Fi), Bluetooth, and near field communication (NFC)) but also other communication systems employing a licensed band and an unlicensed band. This should be judged by those of ordinary skill in the art.

In various exemplary embodiments of the present disclosure described below, a hardware-based approach will be described as an example. However, since various embodiments of the present disclosure include technology that employs both hardware and software, various embodiments of the present disclosure do not exclude software-based approaches.

In addition, in the following description, terms indicating control information, a term referring to an entry, a term referring to network entities, a term referring to components of a device, and the like are used for illustrative purposes only. Accordingly, the present disclosure is not limited by the terms, and other terms with equivalent technological meanings may be used.

For convenience of description, abbreviations used in the present invention will be described.

A PSBCH is a physical sidelink broadcast channel. A PSCCH is a physical sidelink control channel. A PSDCH is a physical sidelink discovery channel. A PSSCH is a physical sidelink shared channel. An SLSS is a sidelink synchronization signal. SLSSs include a primary sidelink synchronization signal (PSSS) and a secondary sidelink synchronization signal (SSSS). An SLSS and a PSBCH may be transmitted together.

A sidelink may be an interface between terminals. A sidelink may correspond to an LTE-vehicle-to-everything (V2X) (PC5) interface. Device-to-device (D2D) communication may be referred to as sidelink communication, or simply communication, and D2D discovery may be referred to as sidelink discovery, or simply discovery. A D2D terminal is a terminal that performs a D2D operation, and the D2D operation may include at least one of D2D communication and D2D discovery.

V2X is communication between a terminal installed in a vehicle and an entity. When the entity corresponding to X of V2X is a vehicle, a pedestrian, and infrastructure, V2X may be vehicle-to-vehicle (V2V), vehicle-to-pedestrian (V2P), and vehicle-to-infrastructure (V2I), respectively. A V2X terminal may be a terminal that supports V2X communication.

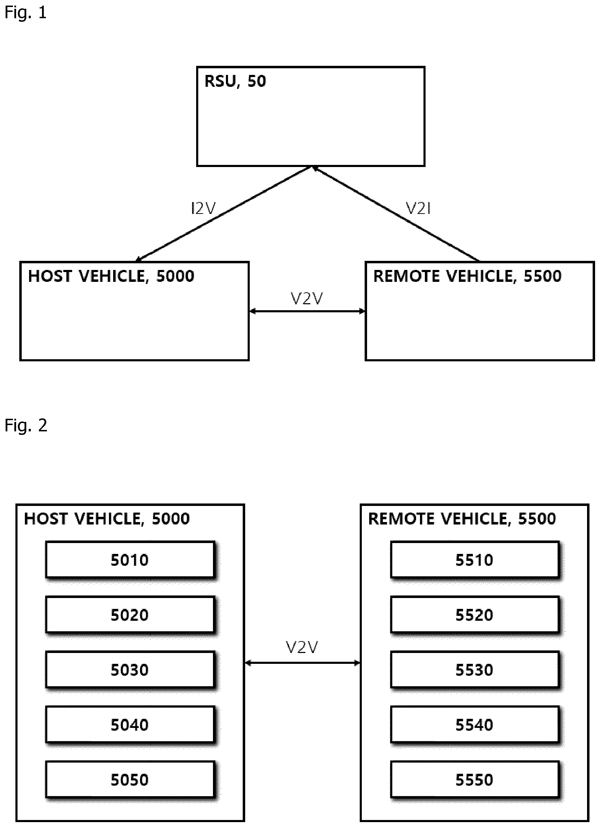

FIG. 1 is a diagram of a system for expanding a recognition area of a vehicle on the basis of surrounding environment information according to a disclosure, and FIG. 2 is a diagram illustrating detailed internal configurations of a first vehicle 5000 and a second vehicle 5500 according to a disclosure.

The system for expanding a recognition area of a vehicle on the basis of surrounding environment information according to the present embodiment may include the first vehicle 5000, the second vehicle 5500, and/or a roadside unit (RSU) 50 (hereinafter, this has the same meaning as a cooperative-intelligent transport system (C-ITS) smart edge RSU or a smart edge RSU).

The first vehicle 5000 may receive information from the RSU 50 through I2V communication and transmit information to the second vehicle 5500 through V2V communication. The second vehicle 5500 may receive information from the first vehicle 5000 through V2V communication and transmit information to the RSU 50 through V2I communication.

The first vehicle 5000 may include a sensor unit 5010 for detecting surrounding environment information, a communication unit 5020 for communicating with the second vehicle 5500, a memory 5030 for storing at least one instruction, a processor 5040 for executing the at least one instruction, and/or a power supply 5050.

In the present specification, the second vehicle 5500 is a vehicle that receives the surrounding environment information from the first vehicle 5000 at a remote location, but may also transmit surrounding environment information to other vehicles. Accordingly, the second vehicle 5500 may likewise include a sensor unit 5510 for detecting surrounding environment information, a communication unit 5520 for communicating with the first vehicle 5000, a memory 5530 for storing at least one instruction, a processor 5540 for executing the at least one instruction, and/or a power supply 5550, which is the same configuration as the first vehicle 5000. The sensor unit 5010 and 5510 may include a radar sensor, a light detection and ranging (LiDAR) sensor, a camera, an infrared sensor, and the like. The communication units 5020 and 5520 may transmit and receive data on the basis of wireless communication using a V2X communication standard and may be well-known devices. The V2X communication standard mentioned in the present specification may be a well-known communication standard, and as an exemplary embodiment, may be wireless access in vehicular environment (WAVE) conforming to Institute of Electrical and Electronics Engineers (IEEE) 802.11p and IEEE 1609.x. However, the V2X communication standard is not limited thereto and may be, for example, cellular (C)-V2X.

The first vehicle 5000 can expand a recognition range of the second vehicle 5500 by detecting information about an object and/or a situation that is unrecognizable at the location of the second vehicle 5500 and transmitting the information to the second vehicle 5500. The surrounding environment information is information collected by the sensor unit 5010 of the first vehicle 5000, and may include, for example, location information of pedestrians, location information of potholes, location information of a construction site, speed information/movement direction information of pedestrians, area information/depth information of potholes and a construction site, and the like.

Further, the system for expanding a recognition area of a vehicle on the basis of surrounding environment information may further include the RSU 50. In this case, the communication unit 5020 of the first vehicle 5000 may receive safe driving information from the RSU 50 and process the safe driving information to utilize the processed safe driving information in autonomous driving. The safe driving information will be described in detail below. The safe driving information received from the RSU 50 may be not only utilized in autonomous driving of the first vehicle 5000 but also transmitted to the second vehicle 5500 and utilized in autonomous driving of the second vehicle 5500.

According to a disclosure, the communication unit 5020 of the first vehicle 5000 may receive authentication information from the second vehicle 5500 and calculate a security score based on the authentication information of the second vehicle 5500 using Equation 1 below. The authentication information may include the intensity of a signal received from the second vehicle 5500 and a travel distance and current location coordinates of the second vehicle 5500.

[Equation 1]

$$S = \frac{\dfrac{1}{1 + \left[e^{\left(\frac{T \times d_{av} - d_s}{d_{av}}\right)}\right] \times \left[e^{\left(\frac{T \times d_s - d_{av}}{d_s}\right)}\right]}}{T + P_1 \times \sum_{n=1}^{T} w_n + (1 - P_1) \times \left(T - \dfrac{T}{p_2 + p_3 + 1}\right)}$$

In Equation 1, S is a security score, $d_{av}$ is the mean of intensities (dBm) of signals received from the second vehicle 5500 during a certain period, $d_s$ is the intensity (dBm) of a signal currently received from the second vehicle 5500, T is a period set by a user in a time unit (seconds or milliseconds), Pi is the number of times that a current location is within a preset authentication location range during the period T, $p_2$ is the number of times that the current location deviates from the preset authentication location range during the period T, $p_3$ is 1 when the current location is within the preset authentication location range, and is 0 when the current location is not within the preset authentication location range, and $w_n$ is a movement distance (m) at an $n^{th}$ time during the period T. The intensity of a signal received from the second vehicle 5500 may be the intensity of a communication signal received by an antenna of the second vehicle 5500 according to the V2X protocol (the signal may be limited to a communication signal received from the first vehicle 5000, or the intensity may be calculated to include the intensities of not only the communication signal received from the first vehicle 5000 but also a communication signal received from another vehicle).

For example, when $d_{av}$ is 60 dBm, $d_s$ is 70 dBm, T is 7 ms, Pi is 3, $p_2$ is 4, $p_3$ is 0, and $w_n$ is 3 m, 0 m, 1 m, 4 m, 10 m, 10 m, and 15 m, these may be substituted into Equation 1 to calculate a security score.

According to Equation 1, it is possible to deviate from a simple linear calculation and calculate a security score that reflects a driving pattern of the second vehicle 5500 based on the intensity (dBm) of a communication signal, a movement distance, and the like.

When the security score is calculated to be a certain score or more, the first vehicle 5000 according to a disclosure may transmit surrounding environment information and/or safe driving information to the second vehicle 5500. When the security score is calculated to be less than the certain score, the first vehicle 5000 may request additional authentication from the second vehicle 5500. After that, when the additional authentication is approved, the first vehicle 5000 may transmit surrounding environment information and/or safe driving information to the second vehicle 5500 to improve security. At this time, the processor 5040 of the first vehicle 5000 may calculate the security score, and information required for calculating the security score may be received from the second vehicle 5500 through the communication unit 5020.

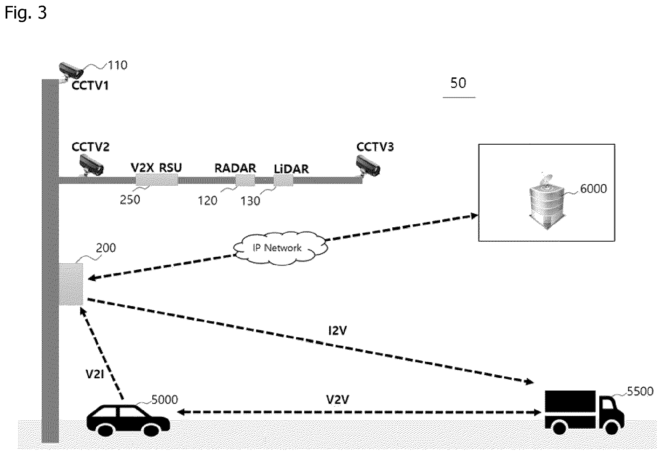

FIG. 3 is a diagram schematically illustrating operations of a C-ITS smart edge RSU for expanding a recognition range of an autonomous vehicle according to a disclosure.

When the vehicle 5000 enters a V2X communication range, the smart edge RSU 50 according to a disclosure may detect vehicle information in accordance with the travel route and the travel speed of the vehicle 5000, generate safe driving information on the basis of the vehicle information, and transmit the safe driving information to the vehicle 5000.

The safe driving information according to a disclosure may include a warning to avoid a pedestrian collision, a warning to avoid a rear-end collision with a nearby vehicle, a warning of an emergency vehicle, and a warning of an emergency situation of a nearby vehicle in accordance with the travel direction and speed of the vehicle 5000, may include traffic information, speed control information of a school zone, and school bus operation information based on the location of the vehicle 5000, and may include information about a road hazard, road surface weather information, road work zone information, and information about a warning of the danger of an intersection signal violation based on the travel route of the vehicle 5000.

According to a disclosure, the smart edge RSU 50 may acquire videos of the vehicle 5000, the nearby vehicle 5500, and a road condition using a plurality of closed-circuit televisions (CCTVs) 110. Also, the smart edge RSU 50 includes at least one radar sensor 120 and at least one LiDAR sensor 130 to detect the surrounding of the vehicle 5000 and the nearby vehicle 5500. In particular, the at least one radar sensor 120 and the at least one LiDAR sensor 130 detect information that is not acquired by the CCTVs 110, helping to expand a recognition range of the vehicle 5000.

The smart edge RSU 50 according to the present invention is installed on a roadside and may be a hybrid V2X RSU for supporting both WAVE and C-V2X which are V2X communication methods.

The smart edge RSU 50 according to a disclosure may attempt to communicate with a vehicle primarily through V2X communication, and when V2X communication with the vehicle is not smooth, may communicate with the vehicle using a mobile communication network.

A communication unit 200 according to the present invention may transmit and receive data on the basis of wireless communication using a V2X communication standard and may be a well-known element. The V2X communication standard mentioned in the present specification may be a well-known communication standard, and as an exemplary embodiment, may be WAVE conforming to IEEE 802.11p and IEEE 1609.x. However, the V2X communication standard is not limited thereto and may be, for example, C-V2X.

The communication unit 200 according to the present invention includes a C-V2X module and a WAVE module. The C-V2X module according to the present invention communicates with a C-V2X terminal installed in a vehicle to transmit and receive data, and the WAVE module included in the hybrid V2X RSU according to the present invention communicates with a WAVE terminal installed in a vehicle to transmit and receive data. The hybrid V2X RSU according to the present invention can simultaneously communicate with a C-V2X terminal and a WAVE terminal installed in a vehicle.

The C-V2X module according to the present invention includes an LTE-V2X module and/or fifth generation (5G)-V2X module. The C-V2X module includes an LTE-V2X antenna and/or 5G-V2X antenna that transmits and receives C-V2X signals including LTE-V2X signals and/or 5G-V2X signals. The C-V2X module includes a C-V2X modem that acquires LTE-V2X communication information and/or 5G-V2X communication information by demodulating an LTE-V2X signal and/or a 5G-V2X signal received by the LTE-V2X antenna and/or the 5G-V2X antenna and generates an LTE-V2X signal and/or a 5G-V2X signal by modulating the acquired LTE-V2X communication information and/or 5G-V2X communication information.

The WAVE module according to the present invention includes a WAVE antenna that transmits and receives WAVE-V2X signals. The WAVE module includes a WAVE model that acquires WAVE communication information by demodulating a WAVE-V2X signal received by the WAVE antenna and generates a WAVE signal by modulating the WAVE communication information.

As described above, WAVE and C-V2X have different protocol stacks and different data modulation methods. When the C-V2X terminal and the WAVE terminal use different frequencies, the two terminals may be simultaneously used without affecting each other. Therefore, the hybrid V2X RSU according to the present invention includes the C-V2X module and the WAVE module and can perform V2X communication using both the C-V2X method and the WAVE method because the C-V2X module and the WAVE module simultaneously communicate with a vehicle using different frequencies.

According to a disclosure, the smart edge RSU 50 may collect information about the vehicle 5000 from the vehicle 5000 through a V2X RSU 250 using V2I communication. The information about the vehicle 5000 may include hardware information and software information of the vehicle 5000, autonomous driving information, information about surroundings of the vehicle 5000, and the like.

The V2X RSU 250 is a base station manufactured to express various communication processes, such as V2V, V2I, V2P, and the like, and in particular, is a base station on a street that collects various information about vehicles, pedestrians, road conditions, and the like.

The vehicle 5000 may include a navigation device and a heads-up display (HUD) as an antenna, a communication device, a management device, a vehicle information collection device, and a display device. According to a disclosure, the smart edge RSU 50 may provide vehicle safety information, traffic information, and the like to a traveling vehicle through the Global Positioning System (GPS), WAVE, on-board diagnostics (OBD), or the like.

The vehicle 5000 and the other vehicle 5500 may communicate with each other through V2V communication. The vehicle 5000 and the other vehicle 5500 may perform full-duplex communication in real time and share traffic hazard information, road object information, obstacle information, road condition information, and the like.

The smart edge RSU 50 according to a disclosure may utilize traffic information collected from the other vehicle 5500 to warn about a hazardous situation that may occur during the travel of the vehicle 5000, or generate collision prevention information, and complement information about a shadow area with information collected from the vehicle 5000.

The smart edge RSU 50 according to a disclosure may communicate with a C-ITS center server 6000 to acquire information such as traffic information, GPS information, and the like and transmit information about an event occurring on a current road, a road surface condition, a road traffic state, a vehicle state, and the like. The smart edge RSU 50 according to a disclosure shares information with the C-ITS center server 6000 and an associated organization such as the National Transportation Information Center, and then process data and transmit the processed data to a site including RSUs. The information transmitted to the site is sent back to the vehicle, and then safety information is exchanged between vehicles. In a C-ITS, several organizations, facilities, and devices communicate with each other bidirectionally.

In addition, to implement a C-ITS, it is important to provide suitable road infrastructure therefor. In other words, the smart edge RSU 50 which communicates with a vehicle to collect and provide information may acquire information about road conditions in real time in communication with a signal controller for providing real-time signal information to the vehicle, a road weather information collector for collecting and providing a road surface condition and weather information, a pedestrian detector, a toll collector, and an unexpected situation detector for providing information about a dropped object or the like.

The smart edge RSU 50 according to a disclosure may recognize a dynamic object in image frames acquired from a CCTV video and locate the dynamic object. Here, artificial intelligence (AI) may be utilized to recognize a dynamic object. In identifying vehicles, people, bicycles, and the like which are dynamic objects included in video frames, it is possible to recognize several objects in one image at a near real-time rate. Here, the AI is utilized to learn objects to be recognized, and then the model for tracking the corresponding objects in frames of a CCTV video is applied. Meanwhile, among AI technologies, a technology for analyzing video information may be employed. In the present invention, any one of a faster region-based convolutional neural network (RCNN), you only look once (YOLO), and a single shot multi-box detector (SSD) may be used as an AI technology for video analysis, but the AI technology for video analysis is not limited thereto. A faster RCNN is a model improved from an initial RCNN through a fast RCNN with an aim at a real-time processing rate. Although having a similar structure to a fast RCNN, a recurrent network called a region proposal network is very small size and utilized for selective search, showing a processing rate that is 250 times that of an RCNN and 25 times that of a fast RCNN. YOLO is a method of dividing an image into grids corresponding to n boxes rather than pixels to track an object, and is a suitable model for a real-time detection system due to near real-time distance performance thereof. An SSD is a model that shows a balance of accuracy and a processing rate using a method of tracking different target objects in a single image on the basis of feature maps having various sizes.

The smart edge RSU 50 according to a disclosure may convert the location of the recognized dynamic object into a global coordinate system. While the CCTV video used as input information in an exemplary embodiment of the present invention has a horizontal resolution (X) of 1920 and a vertical resolution (Y) of 1080, visualization in which a high-definition (HD) map, an aerial map, or a general map is utilized employs a world geodetic system 1984 (WGS84) coordinate system having a latitudinal range of -19 to 90 and a longitudinal range of -180 to 180. Accordingly, to map an object tracked in an input video to a correct location, a transform matrix for describing differences (translate, rotation, and scale) between coordinate systems is required. To convert a location at which the CCTV video and visualization dimensions are defined in a video coordinate system into a map coordinate system through a transform matrix in which a coordinate system transformation relationship between a CCTV coordinate system and a map is established, the present invention employs an H calculation method in terms of usefulness verification. The H calculation method is mainly utilized for two-dimensional (2D)-2D and 2D-three-dimensional (3D) coordinate system transformations.

More specifically, coordinate transformations are allowed through the definition of a transformation relationship of a 3*3 matrix that defines translation, rotation, and the like between a point x 121 shown in a video of each camera and a point x' 122 in the WGS84 coordinate system when the same point x is seen by cameras in different directions.

For example, by utilizing corresponding points in the WGS coordinate system for invariant feature points in the CCTV video, it is possible to define invariant feature points (lanes, road markings, crosswalks, and the like) in the CCTV video and define points corresponding to the video feature points on an HD road map, which is built on the WGS84 coordinate system by actually measuring road information, to manually convert the locations of objects.

Equation 2 below is intended to convert the location of an object, and 25 invariant feature points may be defined for each video to calculate a transformation relationship between coordinate systems.

[Equation 2]

$$P'_{wgs84} = H \times P^{T_{img}}$$

Here, $P_{wgs84}$ is the location of a dynamic object in the WGS84 coordinate system, and $P^{T_{img}}$ is the location of the object in a video image.

Then, the dynamic object information converted into the coordinate system may be output for utilization. The dynamic object information is output as an object type, a location, an identity (ID), and the like, and a process of binding the dynamic object information as one dataset is required for easy transmission and utilization as attributes of one dynamic object. To this end, various formats may be applicable. For example, the JSON format of which encoding and decoding are rapid and stable may be adopted to define attribute information which is output as a result of identifying and tracking the dynamic object.

The defined dynamic object information may be received and decoded by a visualization module and then mapped to an HD map, thus being visualized on the basis of the Web and provided.

The smart edge RSU 50 according to a disclosure performs location-based data collection. More specifically, location information may be collected using a locating technology and actively utilized in constructing a social safety net. For example, the location information may be utilized by an emergency rescue organization, such as the Ministry of National Safety, the National Police Agency, or the like, to provide services including locating a person in need of rescue, logistics, vehicle control, and the like.

The smart edge RSU 50 according to a disclosure may provide location-based traffic information. More specifically, location information may be utilized to display an actual location of a user on a traffic map, and information about a nearby CCTV and highway service area is provided on the traffic map. In particular, during travel, a traffic news notification message about a traffic accident or congestion ahead is automatically transmitted such that the user can be prepared for any unexpected event.

The smart edge RSU 50 according to a disclosure provides a toll collection system. The toll collection system is a facility that collects various data and tolls of vehicles passing through a highway in an automated, mechanized, and computerized manner, and is divided into three types: entrance lane facilities, booth facilities, and sales office facilities. This is a system that requires fast processing and thorough reliability of a large amount of various data on vehicles passing through the highway as a system that is operated in connection with various on-lane devices including sales office computers.

The smart edge RSU 50 according to a disclosure provides hazardous road section information and road surface weather information. A road information sharing system may process real-time average sectional traffic speed, weather forecast information, and road geometry information to share section-specific risk information of the road such that road hazards such as road damage, ice, fog, and the like can be identified in real time. In addition, it is possible to provide a statistical service to provide data by type of road hazard, by road and region, by time period, and by risk level.

The smart edge RSU 50 according to a disclosure may provide a road work zone driving assistance service. A road operator may provide vehicle drivers with information that is helpful to know in advance such as a construction site ahead, a fallen object on the road, a vehicle stopped due to a traffic accident or breakdown, and the like.

The smart edge RSU 50 according to a disclosure may provide an intersection signal violation warning service. This service provides warning information of an intersection signal violating vehicle (non-compliant vehicle) event to vehicles (compliant vehicles) that want to pass an intersection to prevent signal violation accidents.

The smart edge RSU 50 according to a disclosure may provide a safe right turn assistance service. When a vehicle is about to make a right turn at an intersection, this service provides a green pedestrian signal warning and a warning sound to make the driver aware of the risk of a collision with another vehicle making a U-turn on the road the vehicle is about to enter.

The smart edge RSU 50 according to a disclosure may provide a bus operation management service. This service transmits bus location and operation status information to a control center to provide a notification for reckless driving, such as driving with a door open and the like, and analyze and utilize bus operation and vehicle status for operation information and policy establishment.

The smart edge RSU 50 according to a disclosure may provide a yellow bus operation management service. When a yellow bus is traveling in front of a vehicle, this service transmits a driving message in accordance with operation of the yellow bus and a driving message for cautious driving ahead by transmitting bus operation and vehicle status information, and provides a cautious driving notification service for getting on and off a yellow bus and an emergency situation.

The smart edge RSU 50 according to a disclosure provides a school zone speed control service. More specifically, this service provides information about crossing pedestrians through school zone entry and speed limit notifications and pedestrian detection information to prevent safety incidents.

The smart edge RSU 50 according to a disclosure provides a pedestrian collision avoidance warning service. More specifically, this service may provide a service for detecting pedestrian and bicycle information even when the view is obstructed by road obstructions, and providing the notification to prevent collisions with pedestrians.

The smart edge RSU 50 according to a disclosure provides a vehicle collision avoidance assistance service. More specifically, signals are exchanged between vehicles or between a vehicle and the smart edge RSU 50 on a road within a radius of 500 meters to inform drivers of unexpected situations such as a sudden stop by the preceding vehicle, a traffic accident, a fallen object, and the like.

The smart edge RSU 50 according to a disclosure may provide an emergency vehicle approach warning service. The smart edge RSU 50 provides a service for notifying of the approach of an emergency vehicle, such as an ambulance, before the siren is heard such that the right of way may be ensured.

The smart edge RSU 50 according to a disclosure may provide a vehicle emergency warning service. For example, the smart edge RSU 50 may provide a service for transmitting accident information, such as a broken-down vehicle standing on an unseen bend in a road, an accident in front of a vehicle, and the like, to prevent a second accident from occurring and ensure safety.

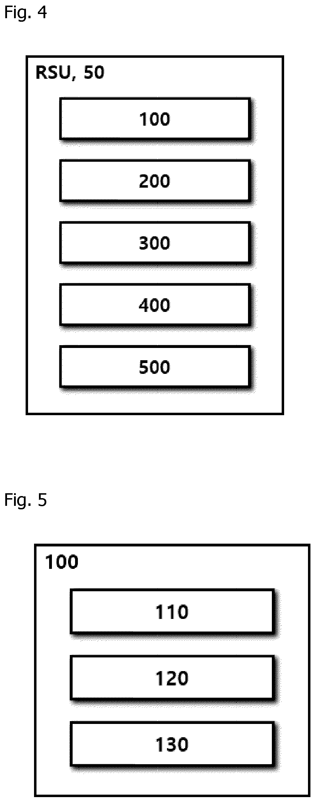

FIG. 4 is a diagram illustrating a configuration of a C-ITS smart edge RSU for expanding a recognition range of an autonomous vehicle according to a disclosure, and FIG. 5 is a diagram illustrating a detailed configuration of a sensor unit according to a disclosure.

The smart edge RSU 50 according to a disclosure may include a sensor unit 100, a communication unit 200, a memory 300, a processor 400, and/or a power supply 500.

The sensor unit 100 according to a disclosure may include a CCTV 110, a radar sensor 120, and a LiDAR sensor 130. In addition, the sensor unit 100 may include a GPS sensor, a road weather sensor (a rain gauge, a snow-depth meter, an anemometer/anemoscope, a tripwire sensor), a pedestrian detection sensor, a fallen object detection sensor, and the like. The sensor unit 100 may include at least one CCTV 110, at least one radar sensor 120, and at least one LiDAR sensor 130.

The CCTV 110 may be installed on one side of the smart edge RSU 50, and a plurality of cameras may be installed at various angles to capture videos of vehicle and road states.

The radar sensor 120 corresponds to a technology for determining the location, speed, and direction of an object using electromagnetic waves. The radar sensor 120 transmits electromagnetic waves through a transmitting and receiving antenna and analyzes the electromagnetic waves reflected by an object to detect the distance, direction, speed, and the like of the object on the basis of the time consumed by the reflected electromagnetic waves and the like.

The LiDAR sensor 130 may detect objects including pedestrians and vehicles on a road in real time. The LiDAR sensor 130 may rotate in a preset direction to emit pulsed lasers in all directions around a traveling vehicle. The LiDAR sensor 130 may may acquire information about surroundings of the vehicle by receiving pulsed lasers reflected from all around the autonomous vehicle. The LiDAR sensor 130 may be installed to detect information about areas corresponding to different ranges of azimuths out of 360 degrees of azimuth around the smart edge RSU 50.

The sensor unit 100 according to a disclosure may include at least one CCTV 110 having a first sensing area, at least one radar sensor 120 having a second sensing area, and at least one LiDAR sensor 130 having a third sensing area.

The processor 400 according to a disclosure may detect one or more first objects in the first sensing area, the second sensing area, and the third sensing area, determine a second object in the travel direction of a vehicle among the first objects, and generate travel information about the travel direction and speed of the vehicle on the basis of the possibility of a collision between the vehicle and the second object to transmit the travel information to the vehicle.

An AI learning model 140 included in the processor 400 according to a disclosure generally controls overall operations of the smart edge RSU 50. For example, the AI learning model 140 included in the processor 400 may execute programs stored in the memory 300 to perform overall control of other components included in the smart edge RSU 50. Also, the AI learning model 140 included in the processor 400 may execute programs stored in the memory 300 to perform functions of the smart edge RSU 50. The AI learning model 140 included in the processor 400 may include at least one processor. The AI learning model 140 included in the processor 400 may include a plurality of processors or one integrated processor depending on the function and role thereof. According to an exemplary embodiment, the AI learning model 140 included in the processor 400 may include at least one processor that executes at least one program stored in the memory 300 to provide a notification message.

The memory 300 may store programs for processing and control and may also store data that is input to the smart edge RSU 50 or output from the smart edge RSU 50.

The memory 300 may include at least one type of storage medium among a flash memory, a hard disk, a multimedia card micro memory, a card-type memory (e.g., a secure digital (SD) memory, an extreme digital (XD) memory, and the like), a random access memory (RAM), a static random access memory (SRAM), a read-only memory (ROM), an electrically erasable programmable read-only memory (EEPROM), a programmable read-only memory (PROM), a magnetic memory, a magnetic disk, and an optical disc.

Programs stored in the memory 300 may be classified into a plurality of modules on the basis of the functions thereof. The plurality of modules are software, not hardware, that functionally operates.

The memory 300 may store a program for processing and control by the processor 400 and may also store an image input to the smart edge RSU 50 or guide information output from the smart edge RSU 50. In addition, the memory 300 may store specific information for determining whether to output the guide information.

The AI learning model 140 included in the processor 400 may communicate with another device or another server using the communication unit 200. The communication unit 200 may include one or more components that allow the smart edge RSU 50 to communicate with another device (not shown) and server (not shown). The other device (not shown) may be, but is not limited to, a computing device, such as the smart edge RSU 50, or a sensing device. For example, the communication unit 200 may include a short-range wireless communication unit, a mobile communication unit, and a broadcast receiving unit.

The short-range wireless communication unit may include, but is not limited to, a Bluetooth communication unit, a Bluetooth Low Energy (BLE) communication unit, an NFC unit, a wireless local area network (WLAN) (Wi-Fi) communication unit, a ZigBee communication unit, an Infrared Data Association (IrDA) communication unit, a Wi-Fi direct (WFD) communication unit, an ultra-wideband (UWB) communication unit, Ant+ communication unit, and the like.

The mobile communication unit transmits and receives wireless signals to and from at least one of an RSU, an external terminal, and a server in a mobile communication network. The wireless signals may include various forms of data in accordance with transmission and reception of a voice call signal, a video call signal, and a text/multimedia message.

According to a disclosure, when information about an area that is sensible by a vehicle is received, the processor 400 may generate information about a shadow area that is not sensible by the vehicle and transmit the information about the shadow area to the vehicle.

According to a disclosure, the processor 400 may receive information about an event occurring near the vehicle from another vehicle through the communication unit 200, calculate the possibility of a collision between the vehicle and the event occurring near the vehicle, generate safety information for the vehicle, and transmit the safety information for the vehicle to the vehicle through the communication unit 200.

According to a disclosure, the smart edge RSU 50 may include a driving monitoring unit for monitoring driving operations of a vehicle, a hardware monitoring unit for monitoring hardware in the vehicle for any abnormality, a software monitoring unit for monitoring software in the vehicle for any abnormality, a communication monitoring unit for monitoring communication status of the vehicle for any abnormality, a road monitoring unit for monitoring road conditions around the vehicle, and a neighboring vehicle monitoring unit for monitoring a state of a vehicle near the vehicle.

The smart edge RSU 50 according to a disclosure directly monitors a state of a vehicle and states of nearby vehicles and thus can provide effective autonomous driving guidance in accordance with road conditions around the vehicle and a state of the vehicle.

The communication unit 200 according to a disclosure may include a V2X communication module. V2X communication technologies are roughly divided into V2X WAVE (Wi-Fi-based vehicle communication) and C-V2X. V2X WAVE and C-V2X have a common point in that vehicles at a short distance from each other are allowed to communicate with each other, and have different ways of communication. C-V2X employs RSUs of existing mobile communication service companies. On the other hand, Wi-Fi-based V2X WAVE communication requires installing dedicated RSUs. For smooth real-time communication in an environment with high throughput, V2X WAVE technology is advantageous.

Therefore, in an area without a V2X RSU 210 or a V2X communication service, the smart edge RSU 50 may transmit information about a vehicle and travel route information to a C-ITS center server 6000 through the mobile communication server using the mobile communication network.

The smart edge RSU 50 may collect message information and traffic information including the current location and time information in real time via the mobile communication network using probe vehicle data (PVD) communication, transmit the collected message information and traffic information to the C-ITS center server 6000, and provide control information and nearby traffic information received from the C-ITS center server 6000 to other vehicles in the corresponding zone.

The communication unit 200 of the smart edge RSU 50 may be included in an external server or an external device or included in a V2X RSU.

The external server and the external device may include a device capable of communication. For example, the external server and the external device may be a desktop computer, a laptop computer, a notebook, a smartphone, a tablet personal computer (PC), a mobile phone, a smart watch, smart glasses, an e-book reader, a portable multimedia player (PMP), a portable gaming machine, a navigation device, a digital camera, a digital multimedia broadcasting (DMB) player, a digital audio recorder, a digital audio player, a digital video recorder, a digital video player, a personal digital assistant (PDA), and the like capable of communication. In particular, the external server may include a harbor control server that controls a harbor control system.

The power supply 500 according to a disclosure may supply power to the smart edge RSU 50. The processor 400 may stably supply required power to constituent units of the smart edge RSU 50 through a power over Ethernet (PoE) switch controller.

According to a disclosure, when a vehicle is in a V2X communication service area of a destination, the smart edge RSU 50 may transmit vehicle information using a V2X receiving unit of the vehicle. When the vehicle is not in the V2X communication service area, the smart edge RSU 50 may control a channel switch of the vehicle such that the vehicle receives vehicle information from the external server using a mobile communication device thereof.

According to a disclosure, the processor 400 may determine whether a vehicle including a hybrid V2X communication system is in a V2X communication service area.

For example, when a V2I signal is continuously receivable through a V2X receiving unit, the smart edge RSU 50 may determine that the vehicle including a hybrid V2X communication system is in the V2X communication service area. When no V2I signal is received through the V2X receiving unit, the smart edge RSU 50 may determine that the vehicle including a hybrid V2X communication system is not in the V2X communication service area.

According to a disclosure, to determine whether a vehicle is in the V2X communication service area, the smart edge RSU 50 may acquire location information of a V2X RSU installed on a road toward the destination of the vehicle and the communication service area of the V2X RSU. A plurality of V2X RSUs may be installed to provide a V2X communication service in the vicinities thereof.

According to a disclosure, the smart edge RSU 50 may determine in real time whether the current location of a vehicle corresponds to the V2X communication service area on the basis of road information, vehicle location information, and vehicle speed information.

After generating vehicle state information on the basis of vehicle control information, the smart edge RSU 50 may determine whether the vehicle is in the V2X communication service area, and when the vehicle is in the V2X communication service area, may transmit the vehicle's parking information to the external server using a V2X transmitting unit of the vehicle.

According to a disclosure, when the vehicle is outside of the V2X communication service area, the smart edge RSU 50 may transmit the vehicle's parking information to the external server using a mobile communication device rather than the V2X transmitting unit.

The mobile communication device according to a disclosure is a communication network intended to perform communication between mobile bodies or between a mobile body and the outside of the mobile body. The mobile communication device may have unique functions, such as tracking the location of a mobile body, setting an RSU, setting a route, and the like, for the mobile body and may include communication methods such as LTE, 5G, sixth generation (6G), and the like. There is no limitation on the type of communication method.

According to a disclosure, the smart edge RSU 50 may acquire video information and sensor data information about the vicinity of a vehicle from a camera, a LiDAR sensor, a radar sensor, and the like included in the vehicle. According to a disclosure, the smart edge RSU 50 may generate an HD map of the location where the vehicle is currently present using the acquired data and thus can generate a safe travel route for the vehicle.

A vehicle HD map is a map containing various layers of information with high precision and is primarily intended for autonomous driving. A vehicle HD map is generally created from data collected by a vehicle with technical equipment.

While existing maps contain geographic information at the street level, HD maps contain detailed information in three dimensions down to the lane level. In other words, HD maps in autonomous driving are not just maps that give directions, but function as sensors that extend people's perception.

HD maps generally have a three-layer structure: a road model, a lane model, and a localization model. The road model is composed of information such as a topology, a travel direction, an altitude, a slope, and the like and is utilized for route finding, the lane model is composed of information such as a road type, a width, a stop zone, speed, and the like and is utilized for real-time autonomous driving decisions, and the localization model is composed of information such as traffic signals, traffic signs, and the like and is utilized to rapidly and accurately determine the location of a vehicle on the map.

According to a disclosure, to generate an HD map, the smart edge RSU 50 may identify an object near a vehicle from a camera video acquired by the vehicle, calculate first relative location information of the object, identify the object near the vehicle from LiDAR and radar sensor videos acquired by the vehicle, calculate second relative location of the object, and calculate absolute location information of the object using the correspondence relationship between the first relative location information and the second relative location information on the basis of GPS coordinates of the vehicle.

According to a disclosure, the smart edge RSU 50 may determine each piece of object information from video and sensor data. According to a disclosure, the smart edge RSU 50 may calculate relative location information of each piece of object information. According to a disclosure, to reduce errors in relative location information, the smart edge RSU 50 may acquire the mean and covariance of relative location information of nearby vehicles in accordance with Equation 3 below.

[Equation 3]

$$Mean\ pose:\quad P_{S,F} = \{x_{S,F},\ y_{S,F},\ \theta_{S,F}\},\qquad S:\ self,\quad F:\ forward$$
$$Covariance:\ C_{S,F}$$

Here, $P_{S,F}$ is relative location coordinates in relative location information of another vehicle, and $C_{S,F}$ is relative covariance in the relative location information of the other vehicle.

Relative location information of another vehicle $V_f$ may exist as probabilities at a plurality of positions in a covariance region $S_f$.

According to a disclosure, the smart edge RSU 50 may acquire absolute location information of the other vehicle on the basis of absolute location information of the vehicle. Here, absolute location information may be location information based on an absolute coordinate system.

According to a disclosure, the smart edge RSU 50 may acquire GPS-based location information as an absolute location. As described above, a satellite signal received from a GPS satellite includes 3D location coordinates of a GPS module based on an absolute coordinate system, and thus the smart edge RSU 50 can acquire absolute location information from the satellite signal.

In addition, the smart edge RSU 50 may also use an HD map in consideration of an error of the satellite signal. The HD map may include information about road facilities and the like such as signs, traffic lights, guardrails.

To this end, the smart edge RSU 50 may extract feature points from a vicinity video. When feature points are extracted, the smart edge RSU 50 can acquire accurate absolute location information by matching a landmark in an HD map area corresponding to the GPS-based location information with the extracted feature points of the vicinity video.

The smart edge RSU 50 may calculate absolute location information of a nearby vehicle which is acquired as described above in accordance with Equation 4.

[Equation 4]

$$Mean\ pose:\quad P_{W,S} = \{x_{W,S},\ y_{W,S},\ \theta_{W,S}\},\qquad W:\ world,\quad S:\ self$$
$$Covariance:\ C_{W,S}$$

Here, $P_{W,S}$ is absolute location coordinates in absolute location information of an information provision vehicle Vs, and Cw,s is absolute covariance in the absolute location information of the information provision vehicle Vs.

The smart edge RSU 50 according to a disclosure may acquire absolute location information of a vehicle on the basis of absolute location information of another vehicle. Since there is an error between the absolute location information of the other vehicle and relative location information of the other vehicle, the smart edge RSU 50 may model absolute location information of the other vehicle as a Gaussian distribution. Specifically, the smart edge RSU 50 may acquire the mean and covariance of the absolute location information of the other vehicle in accordance with Equation 5.

[Equation 5]

$$\text{Mean pose}: \begin{bmatrix} x_{W,F} \\ y_{W,F} \\ \theta_{W,F} \end{bmatrix} = R(\theta_{W,S}) \begin{bmatrix} x_{S,F} \\ y_{S,F} \\ \theta_{S,F} \end{bmatrix} + \begin{bmatrix} x_{W,S} \\ y_{W,S} \\ \theta_{W,S} \end{bmatrix}$$

$$\text{Covariance}: C_{W,F} = (J_{W,S} \cdot C_{W,S} \cdot J_{W,S}^T) + (J_{S,F} \cdot C_{S,F} \cdot J_{S,F}^T)$$

$$R(\theta) = \begin{bmatrix} \cos\theta & -\sin\theta & 0 \\ \sin\theta & \cos\theta & 0 \\ 0 & 0 & 1 \end{bmatrix}$$

$$J_{W,S} = \begin{bmatrix} 1 & 0 & -y_{W,F} \\ 0 & 1 & x_{W,F} \\ 0 & 0 & 1 \end{bmatrix}, \quad J_{S,F} = R(\theta_{W,S})$$

Here, $[x_{W,F} \, y_{W,F} \, \theta_{W,F}]T$ may be absolute location coordinates in absolute location information of the other vehicle, and $C_{W,F}$ may be an absolute covariance in the absolute location information of the other vehicle. Also, $R(\theta)$ may be a rotation transform matrix for converting the absolute coordinate system to a relative coordinate system of a vehicle, $J_{W,S}$ may be a Jacobian matrix for the absolute location information of the vehicle, and $J_{S,F}$ may be a Jacobian matrix for relative location information of the other vehicle. The absolute location information of the other vehicle $V_f$ may exist as probabilities at a plurality of positions in the covariance region $S_f$.

After acquiring the absolute location information of the other vehicle, the smart edge RSU 50 may extract attribute information of the other vehicle. The attribute information may be all information that is extractable from the vicinity video in order to be used in identifying the other vehicle. The attribute information according to a disclosure may include first attribute information about the license plate of the other vehicle and second attribute information about attributes other than the license plate such as the size, the type of vehicle, the color, and the like. Specifically, the information provision vehicle may extract attribute information from a region of interest that is set in the vicinity video at each of a plurality of time points.

Subsequently, the smart edge RSU 50 may accumulate the attribute information extracted at each of the plurality of time points to acquire identification information including possibility information for the attribute information. Subsequently, the smart edge RSU 50 may acquire the absolute location information of the other vehicle on the basis of the absolute location information of the vehicle. According to a disclosure, the smart edge RSU 50 may generate an HD map using the absolute location information of the object.

According to a disclosure, the smart edge RSU 50 utilizes sensors such as a camera, a LiDAR, a radar, a GPS & inertial measurement unit (IMU), and the like to recognize an autonomous vehicle. However, in a complex environment such as a downtown road, a shadow area that is unrecognizable by sensors may be created by buildings, obstacles, and the like. Accordingly, the vehicle may travel in accordance with signal information of an intersection using a signal phase and timing (SPaT) message which is signal aspect operation information of I2V communication among V2X communication technologies, and location information of the vehicle and surrounding environment information of the vehicle may be identified using basic safety message (BSM) data of V2V communication which is information about a nearby vehicle.

According to a disclosure, the smart edge RSU 50 may give a unique number to each object on the basis of relative location information which is based on the GPS coordinates (x, y, z) of the vehicle and the location of an object identified from a video and sensor data. Also, according to a disclosure, the smart edge RSU 50 may decode information, which is included in part 2 of a BSM message of a V2X on-board unit (OBU) of the other vehicle and transmitted through V2V communication, analyze information about video objects, synchronize unique identification numbers given to each of the video objects, and map the unique identification numbers to one set of coordinates to expand a recognition area of the vehicle.

According to a disclosure, the smart edge RSU 50 may match each piece of LiDAR data to video data acquired from the vehicle to convert the video data to the same coordinate system. The mutual position relationship between the camera and a LiDAR sensor may be represented as a geometric relationship matrix that shows the position and movement direction of the LiDAR sensor relative to the camera. According to a disclosure, the smart edge RSU 50 may calculate the position and movement direction of a LiDAR sensor at the same time as the acquisition of video data from the camera by multiplying the position and movement direction acquired from the video data by a geometric relationship matrix. According to a disclosure, the smart edge RSU 50 may convert LiDAR data acquired in local coordinates to actually measured 3D coordinates on the basis of the location of each LiDAR sensor. According to a disclosure, the smart edge RSU 50 may calculate the position and movement direction of a LiDAR sensor acquired at a time not synchronized with the camera by interpolating the position and movement direction of a LiDAR sensor synchronized with the closest time.

According to a disclosure, the smart edge RSU 50 may generate an autonomous driving map for safe travel of a vehicle by setting 3D coordinates of the vehicle on the generated HD map.

According to a disclosure, the C-ITS center server may receive vehicle state information from a vehicle and surrounding environment information from other vehicles and devices at the destination. According to a disclosure, the smart edge RSU 50 may generate an optimal travel route of the vehicle in accordance with a current surrounding environment of the vehicle. The optimal travel route may be generated on the basis of a travel mode (a safe mode, a high-speed mode, or the like) in accordance with the vehicle's travel purpose and may change in real time depending on the vehicle's environment, the vehicle's condition, the vehicle's size, the surroundings of the destination, whether there is an obstacle, the presence of other vehicles, and the like.

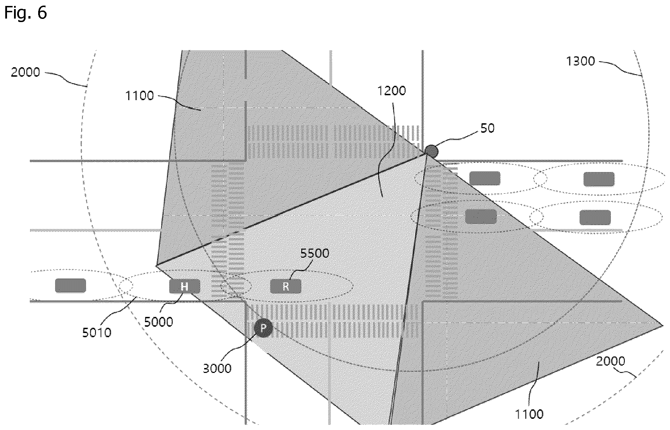

FIG. 6 is a diagram illustrating a process of generating safe driving information on a road with a C-ITS smart edge RSU for expanding a recognition range of an autonomous vehicle according to a disclosure.

According to a disclosure, the smart edge RSU 50 may set a first sensing area 1100 using CCTVs. The first sensing area 1100 may be set with a variable range depending on the angles and number of cameras installed in the smart edge RSU 50.

According to a disclosure, the smart edge RSU 50 may set a second sensing area 1200 using radar sensors. The second sensing area 1200 may be set with a variable range depending on the angles, performance, and number of radar sensors installed in the smart edge RSU 50.

According to a disclosure, the smart edge RSU 50 may set a third sensing area 1300 using LiDAR sensors. The third sensing area 1300 may be set with a variable range depending on the types, angles, performance, and number of LiDAR sensors installed in the smart edge RSU 50.

The first sensing area 1100, the second sensing area 1200, and the third sensing area 1300 have overlapping portions and non-overlapping portions. In other words, the first sensing area 1100, the second sensing area 1200, and the third sensing area 1300 complement one another's non-overlapping shadow areas.

According to a disclosure, the smart edge RSU 50 may recognize a vehicle 5000 within a V2X communication range 2000. According to a disclosure, the smart edge RSU 50 may generate information about another vehicle 5500 and a pedestrian 3000 in accordance with a travel route of the vehicle 5000.

Particularly, the pedestrian 3000 is an object that is not detected in an obstacle recognition range 5010 of a sensor of the vehicle 5000. Also, the pedestrian 3000 is not detected in an obstacle recognition range of a sensor of the other vehicle 5500. Accordingly, the pedestrian 3000 is not recognized using only the sensors of the vehicles or V2V communication, and there is a possibility of a collision during the travel of the vehicle 5000.

However, the pedestrian 3000 is recognizable by the sensor unit of the smart edge RSU 50, and it is possible to calculate the possibility of a collision between the pedestrian 3000 and the vehicle 5000 in accordance with the movement path and speed of the pedestrian 3000 and the travel route and travel speed of the vehicle 5000.

On the basis of map data based on the current location of a vehicle, the smart edge RSU 50 may calculate a risk of possible collision between obstacles including pedestrians and the host vehicle and an attention level to possible collision with other obstacles in accordance with set calculation methods.

As an example of risk calculation, a possibility that there will be an obstacle on a current travel route of the host vehicle may be calculated. More specifically, when the travel route is set in HD map data, the location of each obstacle may be continuously recognized for a certain time to recognize the location and speed of the obstacle, the distance from the host vehicle, and the like, and these may be used to calculate the possibility that the obstacle will invade the current travel route of the host vehicle or the possibility that the obstacle will collide with the host vehicle (or hinder the travel of the host vehicle) to represent a risk of the obstacle.

As an example of attention level calculation, an attention level may be calculated on the basis of the distance from a corresponding obstacle and the like when a person crosses a crosswalk, when there is a stationary vehicle or object on a road, when there is a speeding vehicle on the road, and in other cases. In other words, an attention level may be calculated on the basis of a road anomaly irrespective of a collision with the host vehicle.

Examples of the relationship between a risk and an attention level according to a disclosure will be described. On the basis of a current ego vehicle (i.e., host vehicle), a location and obstacle that are likely to collide with the ego vehicle have a high risk and a high attention level, and a location and obstacle that are not related to the travel direction of the ego vehicle but of which nearby vehicles have to be aware have a low risk but a high attention level.

After calculating precise location information of vehicles and precise location information of obstacles, obstacle information is mapped to the map to calculate a risk and an attention level, and thus it is possible to reduce errors such as an incorrect risk or the like.

Subsequently, the smart edge RSU 50 may perform control such that an operation of avoiding a corresponding obstacle may be performed in accordance with a risk calculated by a risk and attention level calculator. More specifically, the avoidance operation may be controlled to perform at least one preset operation among slowing down, autonomous avoidance, honking the horn, and turning on hazard lights.

To perform the avoidance operation, for example, a safe vehicle driving assistance terminal device may be connected to a vehicle control system installed in a vehicle and may transmit a predetermined control signal for the avoidance operation to the vehicle control system.

To this end, the smart edge RSU 50 may generate attention information (additionally, the location information, speed information, and the like of the host vehicle may be included) including location information and speed information (additionally, movement direction information, size information, and the like may be included) of an obstacle of which a calculated attention level is a set reference value or more and broadcast the attention information through a V2X communication device. Accordingly, it is possible to minimize the amount of transmitted data by only transmitting information about obstacles of which attention levels have been calculated to be high rather than transmitting all detection information.

In addition, the smart edge RSU 50 may generate a safe travel route for a shadow area that is not covered by the sensor unit in accordance with a travel route and speed of the vehicle 5000 and a surrounding environment using information detected by a sensor unit of another vehicle and a sensor unit of another smart edge RSU and transmit the safe travel route to the vehicle 5000.

The smart edge RSU 50 may primarily detect at least one first object in the first sensing area 1100, the second sensing area 1200, and the third sensing area 1300. Here, the at least one first object may include all objects within a sensing range of the smart edge RSU 50. The objects may include vehicles, bicycles, motorcycles, pedestrians, fallen objects, and the like which are moving objects and stationary objects.

According to a disclosure, the smart edge RSU 50 may determine a second object in a movement direction of the vehicle 5000 among the first objects. The second object is an object that is likely to collide with the vehicle 5000 on the basis of a current travel route, a current travel speed, a scheduled travel route, and the like of the vehicle 5000.

The smart edge RSU 50 may generate travel information about the travel direction and speed of the vehicle 5000 on the basis of the possibility of a collision between the vehicle 5000 and the second object to generate a safe travel route. The safe travel route may include control information for changing the current speed or the travel route of the vehicle 5000. The smart edge RSU 50 may transmit the safe travel route to the vehicle 5000 in various ways. For example, the transmission may include a visual notification and an auditory notification.

The smart edge RSU 50 according to a disclosure may acquire vicinity videos of the smart edge RSU 50 using CCTV 1 to CCTV 3 and analyze the videos to acquire recognition information. Also, the smart edge RSU 50 may analyze videos and signals acquired from the LiDAR sensors and the radar sensors to acquire recognition information.

The smart edge RSU 50 may store and manage video and signal information acquired from CCTV 1 to CCTV 3, the LiDAR sensors, and the radar sensors in each server as object recognition information.

The smart edge RSU 50 may integrate all recognition information acquired through a local edge computer and simulate the integrated recognition information to generate safe travel route information. The local edge computer is a part of the processor of the smart edge RSU 50.

The smart edge RSU 50 according to a disclosure may transmit the generated safe travel route information to a security server using V2X communication, and when a roadside alert (RSA) message generation request is received from a V2X RSU, the security server may transmit the safe travel route information to the V2X RSU.

The V2X RSU may generate and transmit a V2X RSU message to an OBU of a vehicle. According to a disclosure, the V2X RSU may transmit the V2X RSU message to OBUs of a plurality of vehicles at the same time. Also, the V2X RSU may transmit the V2X RSU message to a V2X database (DB) server to update the V2X DB server.

V2X OBUs of vehicles that receive a V2X RSA message may transmit PVD data including state information of the vehicles to the V2X RSU through V2X communication. The V2X RSU may transmit the PVD data to the security server, and the security server may transmit the received PVD data to the local edge computer.

The local edge computer may analyze PVD information using the PVD data received from the plurality of vehicles and then update the server. Also, the local edge computer may analyze PVD information of each of the vehicles to update recognition information.

Also, the V2X OBU device of the vehicles may transmit BSM information of the vehicles to the V2X RSU through V2X communication. The V2X RSU may transmit the BSM information to the security server, and the security server may transmit the received BSM information to the local edge computer. BSMs are messages that are most basically used among messages defined in the SAE J2735 standard, and are message information providing information related to vehicle safety.

The local edge computer may analyze the BSM information using BSM message information received from the plurality of vehicles and then update the server.

In addition, the V2X RSU may transmit the BSM information acquired from the plurality of vehicles to the V2X DB server to update the V2X DB server.

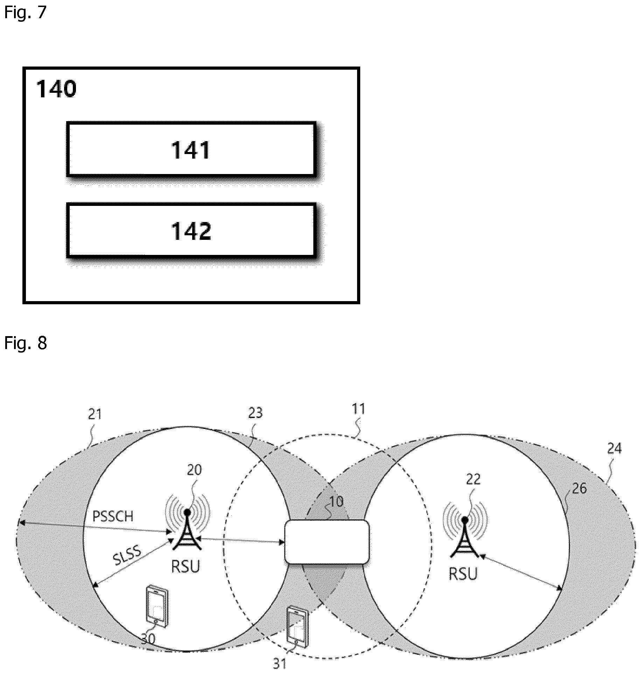

FIG. 7 is a diagram illustrating a detailed configuration of a processor including an AI training model according to a disclosure.

A processor according to a disclosure may include an AI model 140. The AI model 140 may include a data learning unit 141 and a control information generation unit 142.

According to a disclosure, the smart edge RSU 50 may acquire noise data, vibration data, and combustion pressure measurement data which are acquired using sensors included in vehicles.

According to a disclosure, the smart edge RSU 50 may train a first AI learning model using the noise data, the vibration data, the combustion pressure measurement data, and information about the purposes of vehicle operation, and diagnose a travel state of a vehicle.

According to a disclosure, the smart edge RSU 50 may determine a travel mode of the vehicle in real time on the basis of the travel state of the vehicle. Also, the smart edge RSU 50 may generate vehicle control information on the basis of the determined travel state of the vehicle and transmit the vehicle control information to the vehicle.

A second AI model is a deep learning model that is trained to generate control data and a travel route for autonomous driving by analyzing preprocessed sensor data or a processor that runs the deep learning model.

The data learning unit 141 according to a disclosure may learn noise data, vibration data, combustion pressure measurement data, and information about the purposes of vehicle operation. Specifically, the data learning unit 141 may learn criteria for diagnosing a travel state of a vehicle from the noise data, the vibration data, the combustion pressure measurement data, and the information about the purposes of vehicle operation. Also, the data learning unit 141 may learn control information in accordance with travel states of vehicles. In other words, the data learning unit 141 may generate, learn, or update control information for a new vehicle on the basis of accumulated travel states of vehicles.

The AI model 140 included in the processor may analyze a travel state of a vehicle in accordance with the learned criteria to determine a travel mode of the vehicle. Also, the AI model 140 included in the processor may extract data required for learning from travel information and state information of vehicles and surrounding information of a road. From this, the data learning unit 141 may create and update a vehicle control information generation model.

The control information generation unit 142 may recognize a situation from certain data using a trained vehicle control generation model. The control information generation unit 142 may acquire certain data in accordance with a criterion which is preset through learning and may utilize a data recognition model using the acquired data as input values. For example, a trained content model or the like may be used to analyze a vehicle's state information, driving history, destination information, driving purpose information, traffic information, prestored map information, the vehicle's surrounding environment information, and the like and extract data for generating a travel route. Also, the control information generation unit 142 may obtain information about a current surrounding situation from an external server and generate the most appropriate travel mode for the vehicle using the trained model. The travel mode may be a travel time reduction mode, a stable travel mode, an obstacle detection mode, or a travel mode in accordance with a vehicle defect, and the like, and there is no limitation on the number of travel modes.

At least a part of the data learning unit 141 and at least a part of the control information generation unit 142 may be implemented as a software module or manufactured in the form of at least one hardware chip and installed in an electronic device. For example, at least one of the data learning unit 141 and the control information generation unit 142 may be manufactured in the form of a dedicated hardware chip for AI or may be manufactured as a part of an existing general-use processor (e.g., a central processing unit (CPU) or an application processor) or a dedicated graphic processor (e.g., a graphics processing unit (GPU)) and installed in various electronic devices or content data play devices. The dedicated hardware chip for AI is a dedicated processor that specializes in possibility computations, and has higher parallel processing performance than a general-purpose processor according to the related art. Accordingly, it is possible to rapidly process computational tasks in the field of AI such as machine learning. When the data learning unit 141 and the control information generation unit 142 are implemented as software modules (or program modules including instructions), the software modules may be stored in a non-transitory computer-readable medium. In this case, the software modules may be provided by an operating system (OS) or a certain application. Alternatively, some of the software modules may be provided by the OS, and others may be provided by the certain application.

A device 10 for complementing a synchronization signal between RSUs will be referred to as the synchronization signal complementation device 10 below.

FIG. 8 is a diagram illustrating a characteristic of complementing a synchronization signal between RSUs according to a disclosure.

The present system for expanding a recognition range of a vehicle on the basis of surrounding environment information may allow smooth communication between vehicles and/or between a vehicle and infrastructure by providing the synchronization signal complementation device 10 which provides a separate synchronization signal in a shadow area that a synchronization signal does not reach. In this way, surrounding environment information can be smoothly transmitted and received, and thus more complete cooperative vehicle control is possible.

Referring to FIG. 8, a network environment in which there are a plurality of RSUs 20 and 22, a plurality of terminals, and the synchronization signal complementation device 10 may be assumed. Only two terminals, a first terminal 30 and a second terminal 31, are shown for illustration, but n terminals may be included. n is a natural number of 1 or more and is not limited to a specific number Also, n may vary over time.

According to an exemplary embodiment of the present disclosure, sidelink communication between the plurality of terminals may be scheduled through radio resource control (RRC) signaling of an RSU, and each terminal is capable of all V2X communication (e.g., unicast, group cast, and physical sidelink feedback channel (PSFCH) transmission). Accordingly, the plurality of terminals shown in FIG. 8 may be understood as performing unicast communication with each other or as performing group cast communication between some terminals of a group.

Meanwhile, a wireless communication system described in the present disclosure may be a wireless communication system employing a cellular network, such as an NR communication system, an LTE communication system, an LTE-A communication system, a code division multiple access (CDMA) communication system, and a GSM communication system, a WLAN communication system, or another wireless communication system.

A wireless communication network used in the wireless communication system shares available network resources to support communication of multiple wireless communication devices including the plurality of terminals.

For example, in the wireless communication network, information may be transmitted using various multiple access methods such as CDMA, frequency-division multiple access (FDMA), time-division multiple access (TDMA), orthogonal frequency-division multiple access (OFDMA), single carrier frequency-division multiple access (SC-FDMA), orthogonal frequency-division multiplexing (OFDM)-FDMA, OFDM-TDMA, OFDM-CDMA, and the like.

In a sidelink, the following physical channels may be defined.

A PSBCH is a physical sidelink broadcast channel. A PSCCH is a physical sidelink control channel. A PSDCH is a physical sidelink discovery channel. A PSSCH is a physical sidelink shared channel. An SLSS is a sidelink synchronization signal. SLSSs include a PSSS and an SSSS. An SLSS and a PSBCH may be transmitted together.

The RSUs 20 and 22 may communicate with each terminal, and the terminals shown in FIG. 8 may be understood as terminals that are connected to any of the RSUs by wire or wirelessly at a particular time point. Some of the terminals may communicate with RSUs other than the RSUs. The RSUs may communicate with the n terminals and/or the other RSUs to exchange data and control information. According to an exemplary embodiment of the present disclosure, "RSU" may be construed as a comprehensive term that indicates a partial area or function covered by a base station controller (BSC) in CDMA, a node B in WCDMA, an evolved node B (eNB) in LTE, a next-generation node B (gNB) in NR, a sector, or the like.

Meanwhile, each terminal and RSU includes at least two antennas, which are illustrative of a C-V2X communication environment, and the number of antennas may vary in other types of communication environments.

Each terminal shown in FIG. 8 may represent a vehicle on a road or a communication terminal installed in a vehicle. Meanwhile, in V2X communication, the term "OBU" may be used as the collective name of auxiliary devices installed in a vehicle, and throughout the present specification, the term "terminal" may be construed as an OBU.

An RSU may be connected to a plurality of terminals via wireless channels and may provide various communication services to each of the plurality of terminals via the connected wireless channels. All user traffic of an RSU may be served via a shared channel. In addition, an RSU may gather state information of a plurality of terminals, such as buffer states, available transmission power states, channel states, and the like, and schedule the terminals.

The wireless communication system may support beamforming technology through OFDM. Also, the wireless communication system may support adaptive modulation and coding (AMC) in which a modulation scheme and a channel coding rate are determined on the basis of channel states of a plurality of terminals.

Meanwhile, the RSUs 20 and 22 may provide communication coverage for geographic coverage areas 21 and 24, respectively. The geographic coverage areas 21 and 24 may partially overlap. In other words, since PSSCH communication ranges provided by RSUs overlap, a range for transmitting communication data is stable.

Meanwhile, the RSUs 20 and 22 provide geographic coverage areas 23 and 26 for SLSSs by themselves. However, the geographic coverage areas 23 and 26 for SLSSs are narrower than the geographic coverage areas 21 and 24 for PSSCHs, and thus there is a shadow area where PSSCH communication is possible between the RSUs 20 and 22 but SLSS communication is not possible.

An RSU may also be referred to as a gNB, a node B, an eNB, an access point, a base transceiver station, a radio base station, a radio transceiver, a transceiver function, a basic service set (BSS), an extended service set (ESS), or some other suitable terminology. The RSUs 20 and 22 provide access points of an evolved packet core (EPC) to the terminals 30 and 31.

Terminals include a cellular phone, a smartphone, a session initiation protocol (SIP) phone, a laptop, a personal digital assistant (PDA), a satellite radio, a GPS device, a multimedia device, a video device, a digital audio player (e.g., an MP3 player), a camera, a game console, a tablet, a smart device, a wearable device, a vehicle, an electricity meter, a gas pump, a large or small kitchen appliance, a healthcare device, an implant, a display and other similar functioning devices. Some terminals may be referred to as Internet of Things (IoT) devices (e.g., a parking meter, a gas pump, a toaster, a vehicle, a heart monitor, and the like). A terminal may also be referred to as a station, a mobile station, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terminology.

The synchronization signal complementation device 10 of the present invention generates and relays SLSSs between the RSUs 20 and 22 to complement a communication shadow area. The synchronization signal complementation device 10 may be understood as, for example, a device for performing a function that is not generally provided by an RSU, and may particularly provide an SLSS in all communication data provided by the RSU 20 to complement timing synchronization between terminals.

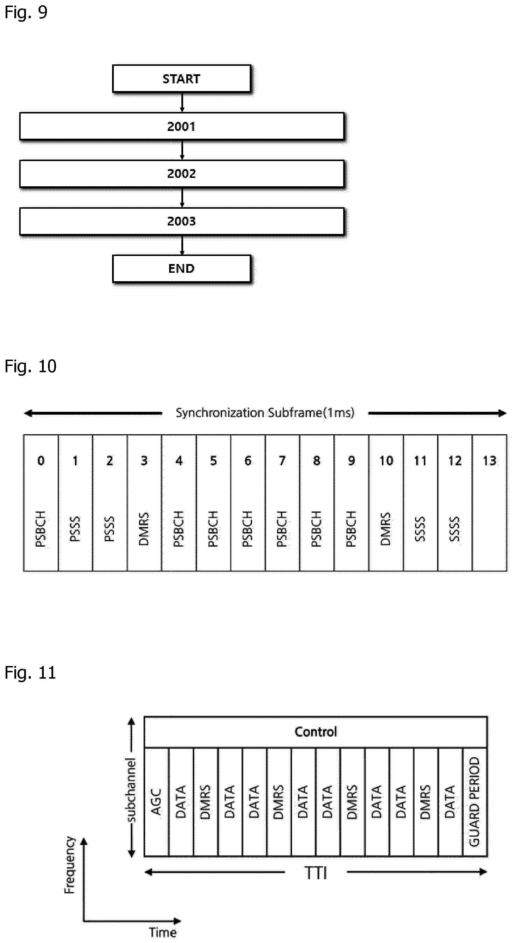

FIG. 9 is a flowchart illustrating a method of complementing a synchronization signal between RSUs according to a disclosure.

According to a disclosure, the method of complementing a synchronization signal between RSUs may include an operation 2001 of receiving a 1st sync signal from a nearby RSU, an operation 2002 of determining a sync timing from the 1st sync signal, and an operation 2003 of generating a 1-1 sync signal on the basis of the sync timing and relaying the 1-1 sync signal.

The operation 2001 in which the synchronization signal complementation device 10 receives the 1st sync signal is performed through communication with the RSU. Communication between one RSU and a plurality of terminals is performed through establishing a plurality of communication channels. In other words, one RSU may be connected to and communicate with a plurality of terminals by wire or wirelessly. Communication channels may be established in proportion to the number of antennas included in terminals and an RSU. In other words, one channel may be established between a first terminal and an RSU, and another channel may be established between a second terminal and the RSU.

According to a disclosure, a 1st sync signal may be an SLSS that is generated using a first RSU as a synchronization reference source, and a 1-1 sync signal may be an SLSS that is generated using a first RSU as a synchronization reference source.

The synchronization signal complementation device 10 may receive the 1st sync signal to expand a physical area of the 1st sync signal which is transmitted from an RSU to communicate with a terminal.

In operation 2002, the synchronization signal complementation device 10 may determine the sync timing from the 1st sync signal. The sync timing is synchronization information that is provided by the RSU for V2X communication with a terminal, and the RSU and the terminal may be in a normal communication state on the basis of timing and frequency synchronization.

The sync timing is a sync time included in a signal transmitted from the RSU to the terminal, and it is necessary for the RSU and the terminal to have the same sync time to smoothly communicate with each other.

According to a disclosure, in the operation 2002 of determining the sync timing, a sync signal may be determined by decoding PSSSs included in the 1st sync signal through a correlator and decoding SSSSs through a matched filter.

According to a disclosure, there are three patterns of PSSSs. All three of the PSSSs are decoded using the correlator, and a PSSS symbol is generated on the basis of a PSSS with the highest magnitude. There are 168 patterns of SSSSs, and an SSSS symbol is generated on the basis of result values obtained by decoding the 168 SSSSs using the matched filter which is a digital filter. Then, the 1-1 sync signal may be generated.

In operation 2003, the 1-1 sync signal may be generated on the basis of the sync timing and relayed. The 1-1 sync signal may be provided to a terminal that performs synchronization using the 1st sync signal. In other words, a synchronization environment is provided for seamless communication of a terminal. The 1st sync signal and the 1-1 sync signal use the same synchronization source and include the same sync timing.

The synchronization signal complementation device 10 generates and relays a new sync signal including the same sync timing as the original sync signal to expand the communication range of a sync signal generated by an existing RSU, allowing smooth communication of a terminal.

Among synchronization sources, a source that is not synchronized with other synchronization sources and transmits a synchronization signal which is generated on the basis of its own reference synchronization to a synchronization target terminal may be separately referred to by the term "original synchronization source" or "active synchronization source." A synchronization source that is not an active synchronization source (i.e., a synchronization source that is synchronized with another synchronization source) may be referred to by the term "passive synchronization source." In other words, at least one passive synchronization source may be synchronized with one active synchronization source and then transmit a synchronization signal to a synchronization target terminal.

For example, since an RSU is not synchronized with another terminal or RSU and transmits a synchronization signal generated on the basis of its own reference synchronization, the RSU may be an active synchronization source. Also, a terminal that is not synchronized with another terminal or RSU and operates as an active synchronization source may be referred to by the term "independent synchronization source (ISS)."

An RSU of the present invention is an active synchronization source, and the synchronization signal complementation device 10 receives a PSSS and an SSSS from the RSU, determines a synchronization timing signal, that is, a sync time, from the PSSS and SSSS, generates a new sync signal using the sync time, and transmits the new sync signal to a terminal.

FIG. 10 is a diagram illustrating positions in a synchronization signal according to a disclosure.

Referring to FIG. 10, the positions of a reference signal and a synchronization signal are shown in a PSBCH of a wireless communication system.

In a general cellular OFDM wireless packet communication system, uplink/downlink data packet transmission is performed in units of subframes, and one subframe is defined as a certain time period including multiple OFDM symbols. The Third Generation Partnership Project (3GPP) LTE standard supports a type 1 radio frame structure applicable to FDD and a type 2 radio frame structure applicable to TDD.

In the type 1 radio frame structure, a radio frame includes ten subframes, each of which includes two slots in the time domain. A time for transmitting one subframe is referred to as a transmission time interval (TTI). For example, each subframe has a length of 1 ms, and each slot has a length of 0.5 ms. One slot includes a plurality of OFDM symbols in the time domain and includes multiple resource blocks (RBs) in the frequency domain.

However, the structure of a radio frame is illustrative, and the number of subframes included in a radio frame or the number of slots included in a subframe and the number of symbols included in a slot may vary.

In the case of a normal cyclic prefix (CP), a demodulation reference signal (DMRS) is mapped as shown in FIG. 10. The last OFDM symbol is used as a guard period and thus is emptied for transmission. Also, receiving/transmitting (Rx/Tx) switching is performed using the last OFDM signal.

A PSSS is used to obtain time domain synchronization and/or frequency domain synchronization, such as OFDM symbol synchronization, slot synchronization, and the like, and an SSSS is used to obtain frame synchronization, a cell group ID, and/or the CP configuration of a cell (i.e., information on the use of a normal CP or an extended CP).

Meanwhile, in a wireless communication system, a packet is transmitted through a wireless channel, and thus the signal may be distorted. Also, to correct the distorted signal on a receiving side, it is necessary for the receiving side to know channel information. Accordingly, a method in which a transmitting side transmits a signal that both the transmitting side and the receiving side are aware of and the receiving side detects channel information in accordance with the degree of distortion of the received signal is generally used. In this case, the signal that both the transmitting side and the receiving side are aware of is referred to as a pilot signal or a reference signal. Also, in wireless communication to which multi-input multi-output (MIMO) technology is applied, there is a separate reference signal for each transmitting antenna.

In a wireless communication system, reference signals may be classified as a reference signal for acquiring channel information and a reference signal for data demodulation. The purpose of the reference signal for acquiring channel information is for a terminal to acquire downlink channel information and thus is transmitted over a wide bandwidth, and it is necessary for a terminal that does not receive downlink data in a specific subframe to receive and measure the reference signal. Also, the reference signal for acquiring channel information may be used to measure a channel state for a handover. The reference signal for data demodulation is a reference signal that is transmitted together using downlink resources when an RSU transmits downlink data, and a terminal may receive the reference signal to perform channel estimation and demodulate the data. The reference signal for demodulation is transmitted in a region where data is transmitted.

A DMRS is a reference signal for measuring a channel to select a modulation and coding scheme (MCS), a precoding matrix indicator (PMI), and the like and is used for data demodulation. Meanwhile, a DMRS is transmitted only in a region where a corresponding terminal is scheduled, that is, a time-frequency domain where the specific terminal receives data.

Referring to FIG. 10, according to an exemplary embodiment of the present invention, a first subframe 0 functions as a synchronization subframe where a PSSS may be mapped to the first and second OFDM symbols, an SSSS may be mapped to the 11th and 12th OFDM symbols, and a DMRS may be mapped to the third and tenth OFDM symbols.

An RSU may be aware of a symbol mapped to each subframe from LTE resource grid information. However, a processor according to an exemplary embodiment of the present invention does not have the information, and thus position information of a PSSS, an SSSS, and a DMRS in the time domain as shown in FIG. 10 is required for synchronization and channel estimation.

To this end, a PSSS and an SSSS may be decoded from the first subframe 0. According to an exemplary embodiment, a correlator may be used for decoding the PSSS, and a matched filter may be used for decoding the SSSS.

When the PSSS and SSSS are decoded, synchronization of the processor is completed, and a sub-processor may detect a DMRS for channel estimation.

FIG. 11 is a diagram illustrating positions in a reference signal according to a disclosure.

Referring to FIG. 11, DMRS are mapped to a third position 2, a sixth position 5, a ninth position 8, and a twelfth position 11 of subframes other than the first subframe 0 and transmitted, and four DMRSs are mapped to one TTI.

As described above with reference to FIG. 10, when a PSSS and an SSSS are decoded from the first subframe 0 to perform synchronization, a sub-processor may detect the DMRSs from the other subframes 1 to 9 to perform channel estimation.

The sub-processor may perform channel estimation for signals received from a plurality of terminals and sequentially transmit the signals to an RSU on the basis of channel values, beginning with a signal corresponding to the largest channel value.

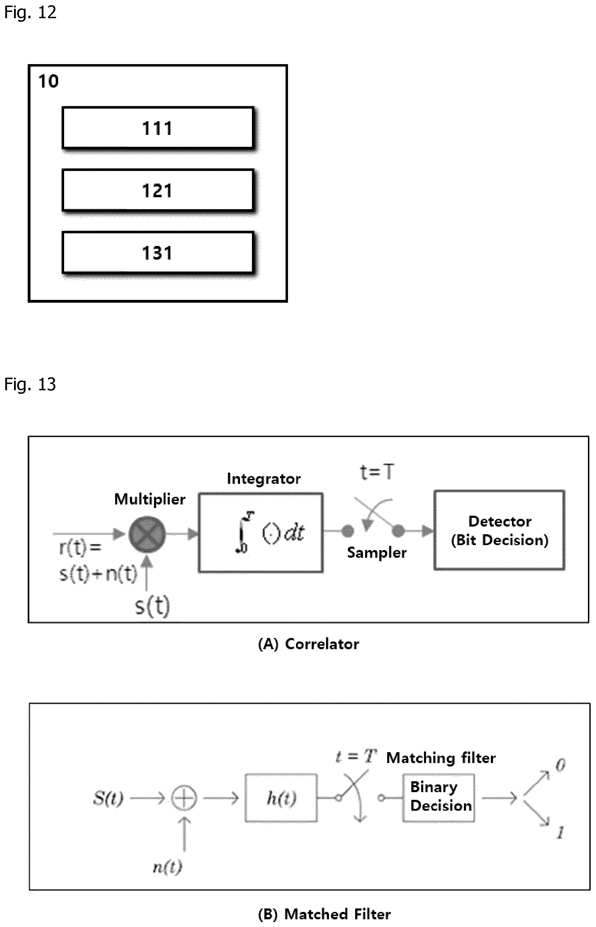

FIG. 12 is a diagram illustrating a configuration of a device for complementing a synchronization signal between RSUs according to a disclosure.

According to a disclosure, a device 10 for complementing a synchronization signal between RSUs includes at least one transceiver 111, at least one processor 121, and at least one memory 131 that is operatively connected to the at least one processor 121 and stores instructions which cause the at least one processor 121 to perform specific operations when executed. The specific operations include an operation of receiving a $1^{st}$ sync signal from a nearby RSU, an operation of determining a sync timing from the $1^{st}$ sync signal, and an operation generating a 1-1 sync signal on the basis of the sync timing and relaying the 1-1 sync signal.

According to another exemplary embodiment of the present invention, assuming that the largest one of a plurality of estimated channel values is A and the second largest value is B, when the value of A-B is a predetermined threshold Th or less, the processor 121 may simultaneously transmit a channel signal corresponding to A and a channel signal corresponding to B to the RSU.

Alternatively, channel signals may be transmitted irrespective of estimated channel values. In other words, a channel signal corresponding to B may be first transmitted to the RSU.

The threshold Th may be determined in advance in consideration of a channel estimation error. This is because, when the difference between channel values is the threshold Th or less, the difference is determined to be negligible.

The synchronization signal complementation device 10 may perform an operation of detecting a sync signal within a communication coverage area at predetermined periods, an operation of determining, when different sync signals are simultaneously detected within the communication coverage area, a priority order of the different sync signals, and an operation of generating a synchronization signal of one of the sync signals which is determined in accordance with the priority order and relaying the synchronization signal.

The priority order of the sync signals may be based on the intensities of the signals. The synchronization signal complementation device 10 may determine a sync timing from a sync signal with a high magnitude to generate a sync signal.

The synchronization signal complementation device 10 may acquire information about a physical cell identity (PCID) of the RSU on the basis of a PSSS/SSSS like in an LTE system and generate a sync signal on the basis of the information.

When detected sync signals are from different sources, the synchronization signal complementation device 10 may operate in a predetermined priority order.

The first priority corresponds to a synchronization signal received directly from the RSU, the second priority corresponds to a synchronization signal received from a terminal directly synchronized with the RSU, the third priority corresponds to a synchronization signal received from a terminal indirectly synchronized with the RSU, the fourth priority corresponds to a synchronization signal received from the global navigation satellite system (GNSS), the fifth priority corresponds to a synchronization signal received from a terminal directly synchronized with the GNSS, and the sixth priority corresponds to a synchronization signal received from a terminal indirectly synchronized with the GNSS.

Meanwhile, when synchronization signals are received from two terminals with the same priority, a synchronization signal may be selected on the basis of demodulation reference signals (DM-RSs) of sidelink synchronization signal blocks (S-SSBs) received from only the two terminals.

FIG. 13 is a diagram illustrating a characteristic of determining a sync time using a correlator and a matched filter according to a disclosure.

An RSU may be aware of a symbol mapped to each subframe from LTE resource grid information, but according to an exemplary embodiment of the present invention, does not have the information. Accordingly, position information of a PSSS, an SSSS, and a DMRS in the time domain is required for synchronization and channel estimation.

To this end, a PSSS and an SSSS may be decoded from the first subframe 0. According to an exemplary embodiment, a correlator may be used for decoding the PSSS, and a matched filter may be used for decoding the SSSS.

The PSSS and SSSS may be included in a block format (e.g., a sidelink synchronization signal (SL SS)/PSBCH block, hereinafter a sidelink-synchronization signal block (S-SSB)) that supports periodic transmission. The S-SSB may have the same numerology (i.e., a subcarrier spacing (SCS) and a CP length) as the physical sidelink control channel (PSCCH)/PSSCH in a carrier, and the transmission bandwidth may be within a (pre-)set sidelink bandwidth part (SL BWP). For example, the bandwidth of the S-SSB may be 11 resource blocks (RBs). For example, the PSBCH may span 11 RBs. The frequency position of the S-SSB may be set (in advance). Therefore, a terminal does not need to perform hypothesis detection in frequency to detect the S-SSB in the carrier.

FIG. 13A is a correlator which is used in PSSS decoding. Since PSSSs transmitted by an RSU include three patterns, all three patterns of PSSSs are input to the correlator to detect a pattern of a PSSS with the largest result value in accordance with Equation 6 below.

[Equation 6]

$$R_x(\tau) = \lim_{T \to \infty} \frac{1}{T} \int_{-T/2}^{T/2} x^*(t)\, x(t+\tau)\, dt$$

When a PSSS with the largest value is determined in accordance with Equation 6, the determined PSSS may be included in a symbol. In other words, a sidelink identifier included in the determined PSSS may be searched for, an integer frequency offset may be estimated, and then an SSSS sidelink identifier may be searched for by the matched filter of FIG. 13B.

SSSSs have at least 100 patterns, but the matched filter is utilized to make a binary decision, which allows rapid determination. Accordingly, an SSSS symbol can be determined.

The synchronization signal complementation device 10 may generate a frame including the determined PSSS symbol and SSSS symbol and generate and transmit a sync signal including the frame to a terminal.

<Synchronization problem occurring in communication coverage area other than network formed by RSU>

To establish a communication link outside the communication network area of an RSU, a terminal is connected to the network, and during the initial connection process, the synchronization signal complementation device 10 transmits a PSSS and an SSSS. The sequence of a synchronization process begins with a series of processes of acquiring an initial timing and frequency synchronization in the time domain, in which a time domain signal is converted into a frequency domain signal through a fast Fourier transform (FFT) while a timing and a fractional frequency offset are estimated and compensated for. After the conversion into the frequency domain signal, a sidelink identifier included in the PSSS is searched for, an integer frequency offset is estimated, and then a sidelink group identifier included in the SSSS is estimated. In the subsequent operation, a residual time and frequency offset which are finely left and a sampling frequency offset are estimated.

In the following process of simultaneously estimating a sidelink identifier included in the PSSS and an integer frequency offset, a differential correlation operation is applied to a PSSS sequence. Here, a high-performance technique for detecting a PSSS and an integer frequency offset which is applicable to an LTE-A sidelink-based C-V2X communication system and has low complexity due to grouping of differential PSSS subcarriers that fall within the same category on the basis of a specific threshold in phase value using symmetric features of differential PSSS subcarriers is proposed.

The synchronization signal complementation device 10 may group differential PSSS subcarriers having a phase difference from the phase value of a differential PSSS sequence within a tolerable angle range in accordance with Equation 7 below.

[Equation 7]

$$G_q = \left\{ k \,\middle|\, \left| \angle \left\{ S_i(k_q) S_i^*(k) \right\} \right| \le \theta + n\frac{\pi}{2} \right\}$$

(Here, L is the angle of a phase difference, $k_q$ is a representative subcarrier in a group, $n \in \{0, 1, 2, 3\}$ and $\theta$ is a phase threshold for grouping differential PSSS subcarriers.)

As a result, a phase tolerance range between a representative subcarrier and a differential PSSS subcarrier within the same group is $[n\pi/2 - \theta, n\pi/2 + \theta]$. When the number of differential PSSS subcarriers in the $q^{th}$ group and the total number of groups are $N_q$ and $N_{Gq}$, respectively, the number of differential PSSS subcarriers in all the groups is $N_p$-2. A method of estimating an integer frequency offset and a sidelink identifier using differential PSSSs which are grouped under the condition of Equation 7 is in accordance with Equation 8 below.

[Equation 8]

$$\Phi(a,b) = \sum_{q=1}^{N_{G_q}} S_b^*(k_q) \sum_{k \in G_q} T_b(k) \overline{D}_l(k+a)$$

Here,

$$\overline{D}(k+a) = D_l(k+a) + D_l^*(-k+a+1)$$,

and $T_b(k) \in \{\pm 1, \pm j\}$, which correspond to parameter values for shifting subcarriers belonging to the $q^{th}$ group $G_q$ to have the same phase as a representative subcarrier. $T_b(k)$ can be compensated without multiplication in consideration of the characteristic of $S_0(k)=S_1^*(k)$.

A correlation operation is performed as the sum of all differential PSSS subcarriers within each group to which $T_b(k)$ is applied such that the differential PSSS subcarriers may be in phase with the representative differential PSSS subcarrier for the group. Subsequently, a correlation operation is performed between a PSSS sequence generated by a transmitter for each group and a differential PSSS sequence. To estimate an integer frequency offset and a sidelink identifier, Equation 9 below is used.

[Equation 9]

$$\left(\hat{\delta}_f, \hat{i}\right) = \underset{|a| \leq A, b \in \{0,1\}}{\arg\max} \Phi(a,b)$$

a and b that maximize the value of $\Phi(a,b)$ may be detected using the above equations and are an estimated integer frequency offset and an estimated sidelink identifier, respectively. The complexity of an estimation technique varies in accordance with the range of a user threshold $\theta$, and an appropriate selection of $\theta$ can improve the performance of the synchronization signal complementation device 10. Preferably, $\theta$ is about 5 degrees.

The synchronization signal complementation device 10 uses the technique for estimating an integer frequency offset and a sidelink identifier, which can reduce the amount of computation by up to 50% compared to a method according to the related art.

The synchronization signal complementation device 10 expands the sync signal transmission range of an RSU. Accordingly, the synchronization signal complementation device 10 provides an environment where a moving terminal may maintain smooth communication with the RSU. Therefore, in terms of a terminal, it is possible to acquire a signal including subframes that are generated by the same synchronization source.

A method of complementing a synchronization signal may include an operation of acquiring a first identifier mark included in a 1st sync signal from a terminal receiving the 1st sync signal with a nearby RSU, an operation of transmitting the first identifier mark to a cellular base station and acquiring parameter information for communication of the terminal, and an operation of complementing a 1-1 sync signal on the basis of the parameter information and transmitting the 1-1 sync signal to the terminal.

A method of complementing a synchronization signal may include an operation of receiving a 1st sync signal from a terminal that is performing first communication with a first RSU, an operation of determining a 1st sync timing from the 1st sync signal, an operation of generating a 1-1 sync signal on the basis of the 1st sync timing and transmitting the 1-1 sync signal to the terminal, an operation of receiving a 2nd sync signal from the terminal that is performing second communication with a second RSU in accordance with movement of the terminal., an operation of determining a 2nd sync timing from the 2nd sync signal, an operation generating a 2-1 sync signal on the basis of the 2nd sync timing and transmitting the 2-1 sync signal to the terminal, and an operation of receiving the 1st sync signal and the 2nd sync signal from at least one nearby RSU.

A method of complementing a synchronization signal may include an operation of selecting a larger value between a 1st sync signal and a 2nd sync signal to determine a sync timing, generating a sync signal using the determined sync timing, and transmitting the sync signal.

The method of complementing a synchronization signal may further include an operation of acquiring, when a value calculated by subtracting the value of the 2nd sync signal from the value of the 1st sync signal is a certain threshold or less, a 1st sync timing and a 2nd sync timing from the 1st sync signal and the 2nd sync signal, respectively, an operation of selecting one of the 1st sync timing and the 2nd sync timing on the basis of the sync signal acquired from a terminal, and an operation of generating a sync signal on the basis of the selected sync timing and transmitting the sync signal.

In the absence of any clear order of operations constituting a method according to the present invention, the operations may be performed in any appropriate order. The present invention is not necessarily limited to the order in which the operations are described.

A computer program for performing operations of all methods provided by the present invention may be stored in a recording medium.

Operations of the method or algorithm described according to an exemplary embodiment of the present invention may be implemented directly by hardware, implemented by software modules executed by hardware, or implemented by a combination of hardware and software modules. The software modules may be present in a RAM, a ROM, an erasable programmable ROM (EPROM), an EEPROM, a flash memory, a hard disk, a detachable disk, a CD-ROM, or any form of computer-readable recording medium well known in the technical field to which the present invention pertains.

Components of the present invention may be implemented as a program (or an application) and stored in a medium to be executed in a combination including a computer as hardware. Components of the present invention may be executed by software programming or software elements. Similarly, embodiments may be implemented in a programming or scripting language, such as C, C++, Java, assembler, and the like, to include various algorithms which are embodied as combinations of data structures, processes, routines, or other programming elements. Functional aspects may be implemented as an algorithm executed by one or more processors.

According to the present disclosure, it is possible to expand a recognition area of an autonomous vehicle by providing safe driving information required for autonomous driving in real time using various information collected by entities of an autonomous driving system.

According to the present disclosure, it is possible to support smooth communication in a synchronization shadow area that may exist between RSUs because a synchronization signal region is smaller than a signal region for transmitting data.

Although exemplary embodiments of the present invention have been described above with reference to the accompanying drawings, those of ordinary skill in the art should understand that the present invention can be implemented in other specific forms without changing the technical spirit or essential features thereof. Therefore, it should be understood that the embodiments described above are illustrative in all aspects and are not restrictive.

**Claims**

1. A system for expanding a recognition area of a vehicle on the basis of surrounding environment information, the system comprising:

   a first vehicle (5000); and
   a second vehicle (5500),
   wherein the first vehicle (5000) comprises:

      a sensor unit (5010) configured to detect surrounding environment information;
      a communication unit (5020) configured to communicate with the second vehicle (5500);
      a memory (5030) configured to store at least one instruction; and
      a processor (5040) configured to execute the at least one instruction.

2. The system of claim 1, further comprising a roadside unit (RSU) (50),
   wherein the communication unit (5020) of the first vehicle (5000) receives safe driving information from the RSU (50).

3. The system of claim 2, wherein the RSU (50) comprises:

   a sensor unit (100) configured to detect an object within a vehicle-to-everything (V2X) communication range;
   a communication unit (200) configured to communicate with the first vehicle (5000) within the V2X communication range;
   a memory (300) configured to store at least one instruction; and
   a processor (400) configured to execute the at least one instruction,
   wherein, when the first vehicle (5000) enters the V2X communication range, the processor (400) acquires vehicle information in accordance with a travel route and a travel speed of the first vehicle (5000), generates the safe driving information on the basis of the vehicle information and information about an object near the first vehicle (5000), and transmits the safe driving information to the first vehicle (5000).

4. The system of claim 3, wherein the sensor unit (100) comprises:

   at least one closed-circuit television (CCTV) (110) having a first sensing area;
   at least one radar sensor (120) having a second sensing area; and
   at least one light detection and ranging (LiDAR) sensor (130) having a third sensing area.

5. The system of claim 4, wherein the processor (400) primarily detects one or more first objects in the first sensing area, the second sensing area, and the third sensing area, determines a second object in the travel direction of the first vehicle (5000) among the first objects, and generates safe driving information about the travel direction and the travel speed of the first vehicle (5000) on the basis of a possibility of a collision between the first vehicle (5000) and the second object to transmit the safe driving information to the first vehicle (5000).

6. The system of any one of claims 2 to 5, wherein the safe driving information includes:

a warning to avoid a pedestrian collision, a warning to avoid a rear-end collision with a nearby vehicle, a warning of an emergency vehicle, and a warning of an emergency situation of a nearby vehicle in accordance with a travel direction and speed of the first vehicle (5000);
traffic information, speed control information of a school zone, and school bus operation information based on a location of the first vehicle (5000), and
hazardous road section information, road surface weather information, road work zone information, and information about a warning of danger of an intersection signal violation based on the travel route of the first vehicle (5000).

7. The system of any one of claims 1 to 6, wherein, when information about an area that is sensible by the first vehicle (5000) is received, the processor 400 generates information about a shadow area that is not sensible by the first vehicle (5000) and transmits the information about the shadow area to the first vehicle (5000).

8. The system of any one of claims 1 to 7, further comprising a synchronization signal complementation device (10), wherein the synchronization signal complementation device (10) complements a synchronization signal between roadside units (RSUs) through the operations of:

receiving a 1st sync signal from a nearby RSU;
determining a sync timing from the 1st sync signal; and
generating a 1-1 sync signal on the basis of the sync timing and transmitting the 1-1 sync signal.

9. The system of claim 8, wherein the 1st sync signal is a sidelink synchronization signal (SLSS) that is generated using a first RSU as a synchronization reference source, and
the 1-1 sync signal is an SLSS that is generated using the first RSU as a synchronization reference source.

10. The system of claim 8 or 9, wherein the determining of the sync timing comprises decoding primary sidelink synchronization signals (PSSSs) included in the 1st sync signal through a correlator and decoding secondary sidelink synchronization signals (SSSSs) through a matched filter to determine a synch timing.

11. The system of claim 10, wherein the PSSSs have three types, and all three types of the PSSSs are decoded using the correlator to generate a PSSS symbol on the basis of a PSSS with a highest magnitude, and
the SSSSs have 168 patterns, and an SSSS symbol is generated on the basis of result values obtained by decoding the 168 SSSSs using the matched filter which is a digital filter to generate a subframe of the 1-1 sync signal.

12. The system of any one of claims 8 to 11, wherein the synchronization signal complementation device (10) complements the synchronization signal between the RSUs further through the operations of:

detecting a sync signal within a communication coverage area at predetermined periods;
when different sync signals are simultaneously detected within the communication coverage area, determining a priority order of the different sync signals; and
generating a synchronization signal of one of the sync signals which is determined in accordance with the priority order and transmitting the synchronization signal.

Fig. 1

RSU, 50

I2V

V2I

HOST VEHICLE, 5000

V2V

REMOTE VEHICLE, 5500

Fig. 2

HOST VEHICLE, 5000

5010

5020

5030

5040

5050

V2V

REMOTE VEHICLE, 5500

5510

5520

5530

5540

5550

Fig. 3

Fig. 4

RSU, 50

| 100 |
| 200 |
| 300 |
| 400 |
| 500 |

Fig. 5

100

| 110 |
| 120 |
| 130 |

Fig. 6

Fig. 7

Fig. 8

Fig. 9

Fig. 10

Fig. 11

Fig. 12

Fig. 13

(A) Correlator

(B) Matched Filter

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230191166
- KR 1020240013384
- KR 1024778588
- KR 20200086681